# EUROPÄISCHE PATENTSCHRIFT

(11) **EP 1 499 813 B1**
(45) Veröffentlichungstag und Bekanntmachung des Hinweises auf die Patenterteilung: **07.12.2005**
(21) Anmeldenummer: 03718795.2
(22) Anmeldetag: 28.04.2003
(51) Int. Cl.: F16D 55/46

(54) **KRAFTFAHRZEUGBREMSANLAGE MIT PARKBREMSFUNKTION UND ELEKTROMECHANISCHE RADBREMSE FÜR EINE SOLCHE KRAFTFAHRZEUGBREMSANLAGE**
MOTOR VEHICLE BRAKE SYSTEM COMPRISING A PARKING BRAKE FUNCTION AND ELECTROMECHANICAL WHEEL BRAKE FOR SUCH A MOTOR VEHICLE BRAKE SYSTEM
SYSTEME DE FREINAGE POUR VEHICULE AUTOMOBILE, POURVU D'UNE FONCTION DE FREIN DE STATIONNEMENT, ET FREIN DE ROUE ELECTROMECANIQUE POUR UN TEL SYSTEME DE FREINAGE

(30) Priorität: 26.04.2002 DE 10218825; 11.06.2002 DE 20209038 U
(43) Veröffentlichungstag der Anmeldung: 26.01.2005
(73) Patentinhaber: Estop GmbH, 82284 Grafrath (DE)
(72) Erfinder: PASCUCCI, Antonio, 82229 Seefeld (DE); HARTMANN, Henry, 82205 Gilching (DE); SCHAUTT, Martin, 80634 München (DE)
(74) Vertreter: Beyer, Andreas
(86) Internationale Anmeldenummer: PCT/EP2003/004431
(87) Internationale Veröffentlichungsnummer: WO 2003/091591

(56) Entgegenhaltungen:
- DE-A- 2 052 496
- DE-A- 10 037 055
- DE-A- 19 819 564
- DE-A- 19 931 228
- US-A- 3 430 736

## Beschreibung

Die Erfindung betrifFt eine Kraftfahrzeugbremsanlage mit selbstverstärkenden elektromechanischen Radbremsen gemäß dem Oberbegriff des Anspruchs 1 und eine selbstverstärkende elektromechanische Radbremse für eine solche Kraftfahrzeugbremsanlage gemäß dem Oberbegriff des Anspruchs 18.

Selbstverstärkende elektromechanische Radbremsen dieser gattung an sich sind bekannt, beispielsweise aus der deutschen Patentschrift DE 198 19 564 C2. Eine elektromechanische Radbremse mit Selbstverstärkung umfasst einen elektrischen Aktuator, der eine Betätigungskraft erzeugt und über eine Selbstverstärkungseinrichtung auf ein Reibglied überträgt, um das Reibglied gegen ein drehbares, abzubremsendes Bauteil der Radbremse zu drücken. Die Selbstverstärkungseinrichtung weist ein keilförmiges Element mit einer Keilfläche auf, die unter einem Steigungswinkel α angeordnet ist. Eine korrespondierende reibgliedseitige Keilfläche, die beispielsweise am Reibbelagträger ausgebildet ist, wirkt mit der Keilfläche des Keilelementes zusammen, indem das sich drehende, abzubremsende Bauteil der Radbremse das Reibglied, welches beim Bremsvorgang gegen das abzubremsende Bauteil gedrückt wird, etwas in Drehrichtung mitnimmt, wodurch die beiden Keilflächen sich relativ zueinander bewegen und das Reibglied noch stärker gegen das abzubremsende Bauteil der Radbremse gedrückt wird, ohne dass hierzu eine Erhöhung der vom Aktuator gelieferten Betätigungskraft erforderlich ist. Der Steigungswinkel α der Keilflächen kann dabei so gewählt werden, dass bei normalen Bremsvorgängen vom Aktuator eine Betätigungskraft nur anfänglich aufgebracht werden muss, um das Reibglied gegen das abzubremsende Bremsenbauteil zu drücken, und dass im weiteren Verlauf der Bremsung keine oder jedenfalls nur geringfügige Aktuatorkräfte erforderlich sind.

Aufgrund der in der Selbstverstärkungseinrichtung liegenden Besonderheit selbstverstärkender elektromechanischer Bremsen können von direkt betätigten elektromechanischen Radbremsen bekannte Konzepte zur Erzielung einer Parkbremsfunktion nicht übernommen werden.

Der Erfindung liegt die Aufgabe zugrunde, bei einer selbstverstärkende elektromechanische Radbremsen verwendenden Kraftfahrzeugbremsanlage eine Parkbremsfunktion bereitzustellen und eine für eine solche Kraftfahrzeugbremsanlage geeignete selbstverstärkende elektromechanische Radbremse anzugeben.

Diese Aufgabe ist erfindungsgemäß mit einer Kraftfahrzeugbremsanlage gelöst, die die im Patentanspruch 1 angegebenen Merkmale aufweist und mit eine elektromechanischen Radbremse die die im Patentanspruch 18 angegebenene merkmale aufweist. Demnach hat zur Realisierung einer Parkbremsfunktion die Selbstverstärkungseinrichtung mindestens einer ersten Radbremse wenigstens eine unter einem Steigungswinkel angeordnete Keilfläche, die zur Kraftverstärkung bei Bremsungen in Vorwärtsfahrt dient, während die Selbstverstärkungseinrichtung mindestens einer zweiten Radbremse wenigstens eine unter einem Steigungswinkel angeordnete Keilfläche hat, die zur Kraftverstärkung bei Bremsungen in Rückwärtsfahrt dient. In der Parkbremsfunktion sind die Reibglieder der ersten Radbremse unter Benutzung der zur Kraftverstärkung bei Bremsungen in Vorwärtsfahrt dienenden Keilfläche gegen das abzubremsende Bauteil der Radbremse gespannt, und die Reibglieder der zweiten Radbremse sind unter Benutzung der zur Kraftverstärkung bei Bremsungen in Rückwärtsfahrt dienenden Keilfläche gegen das abzubremsende Bauteil der Radbremse gespannt. Auf diese Weise ist sichergestellt, dass ein mit der Parkbremsfunktion der erfindungsgemäßen Kraftfahrzeugbremsanlage gesichertes Fahrzeug sich weder in Vorwärtsrichtung noch in Rückwärtsrichtung bewegen kann. Eine das Fahrzeug in Vorwärtsrichtung drängende Kraft würde nämlich eine selbsttätige stärkere Zuspannung der ersten Radbremse zur Folge haben, während umgekehrt eine das Fahrzeug in Rückwärtsrichtung drängende Kraft zu einer stärkeren Zuspannung der zweiten Radbremse führen würde.

In der Regel, insbesondere bei zweiachsigen Fahrzeugen, wird die erste Radbremse eine vordere Radbremse und die zweite Radbremse eine hintere Radbremse sein. Jedoch können die erste und die zweite Radbremse auch an ein und derselben Achse eines Fahrzeuges angeordnet sein, beispielsweise an einer Antriebsachse einer Zugmaschine.

Prinzipiell reicht es zur Erzielung der Parkbremsfunktion bereits aus, wenn jeweils eine erste und eine zweite Radbremse, die sich vorzugsweise am Fahrzeug diagonal gegenüber liegen, in der genannten Weise zugespannt sind. Zur Erhöhung der in der Parkbremsstellung erzielten Bremskraft werden normalerweise jedoch zwei erste Radbremsen und zwei zweite Radbremsen, vorzugsweise zwei vordere und zwei hintere Radbremsen, wie beschrieben zugespannt sein. Alternativ ist es auch möglich, in der Parkbremsstellung die Radbremsen achsweise so zuzuspannen, dass die eine Radbremse die zur Kraftverstärkung in Vorwärtsfahrt und die andere Radbremse die zur Kraftverstärkung in Rückwärtsfahrt dienende Keilfläche in der Parkbremsfunktion benutzt. Dies setzt allerdings voraus, dass alle Radbremsen jeweils mit Keilflächen sowohl zur Kraftverstärkung bei Bremsungen in Vorwärtsfahrt als auch zur Kraftverstärkung bei Bremsungen in Rückwärtsfahrt ausgestattet sind. Weist das Kraftfahrzeug mehrere Hinterachsen auf, können die Radbremsen von allen Hinterachsen oder nur von einem Teil der Hinterachsen zur Realisierung der Parkbremsfunktion herangezogen werden.

Es sei an dieser Stelle ausdrücklich darauf hingewiesen, dass die erfindungsgemäße Kraftfahrzeugbremsanlage in erster Linie zur Ausführung von Betriebsbremsungen gedacht ist, und dass die erfindungsgemäß realisierte Parkbremsfunktion eine zusätzliche Funktion der Bremsanlage ist. Da die vorderen Radbremsen bei normalen Betriebsbremsungen bis zu 80% der Bremskraft aufbringen müssen, können bei einfachen Ausführungsformen der erfindungsgemäßen Kraftfahrzeugbremsanlage die hinteren Radbremsen so ausgeführt sein, dass sie an Vorwärtsbremsungen nicht teilnehmen, d.h. jede hintere Radbremse weist nur eine Keilfläche auf, die zur Kraftverstärkung bei Bremsungen in Rückwärtsfahrt dient. Da bei Rückwärtsfahrt die Maximalgeschwindigkeit eines Fahrzeuges begrenzt ist, können des weiteren bei einer solchen einfachen Ausführungsform die vorderen Radbremsen so ausgeführt sein, dass sie an einer Bremsung eines sich rückwärts bewegenden Fahrzeuges nicht teilnehmen, d.h. die vorderen Radbremsen weisen nur solche Keilflächen auf, die zur Kraftverstärkung bei Bremsungen in Vorwärtsfahrt dienen. Muss eine Kraftfahrzeugbremsanlage höhere Ansprüche erfüllen, beispielsweise bei einem Einsatz in schnellen und/oder schweren Fahrzeugen, dann werden üblicherweise zumindest die hinteren selbstverstärkenden elektromechanischen Radbremsen so ausgeführt sein, dass sie in beiden Fahrtrichtungen bremsen können, d.h. diese Radbremsen weisen Keilflächen für Vorwärtsfahrt und Rückwärtsfahrt auf. Weil die vorderen Radbremsen aufgrund der im normalen Fahrbetrieb (Vorwärtsfahrt) auftretenden dynamischen Achslastverlagerung ohnehin für die Bewältigung größerer Bremskräfte ausgelegt sind, ist auch die von einer solchen Bremse entgegen der Keilrichtung, d.h. in Rückwärtsfahrt erzeugbare Bremskraft zumeist ausreichend, insbesondere deshalb, da die bei einer Bremsung in Rückwärtsfahrt auftretende dynamische Achslastverlagerung die Vorderachse entlastet und den Aufbau größerer Bremskräfte verhindert.

Gemäß einer bevorzugten Ausgestaltung der erfindungsgemäßen Kraftfahrzeugbremsanlage, bei der der Steigungswinkel der genannten Keilflächen derart gewählt ist, dass die Radbremsen jedenfalls bei normalerweise vorherrschenden Reibungskoeffizienten zwischen dem Reibglied und dem abzubremsenden Bauteil der Radbremse selbsthemmend sind, erfolgt zur Erzielung der Parkbremsfunktion zunächst eine weggesteuerte Zuspannung jeder an der Parkbremsfunktion teilnehmenden Radbremse. Mit dem Begriff "weggesteuerte Zuspannung" ist hier gemeint, dass zur Erzielung der Parkbremsfunktion jede Radbremse zunächst einen vorbestimmten Zustellweg durchläuft, um damit ein gewünschtes vorgegebenes Maß an Haltekraft zu erzielen. Der vorbestimmte Zustellweg darf nicht zu groß gewählt werden, um ein zu starkes Zuspannen der Radbremse zu vermeiden, zu dem es beispielsweise bei einer aufgrund vieler vorhergehender Betriebsbremsungen sehr heißen Bremse kommen könnte. Auf die weggesteuerte Zuspannung jeder Radbremse folgt eine als "kraftlose" Nachführung bezeichnete weitere Betätigung des Aktuators der Bremse mit nur geringer Kraft, um im Anschluss an die Zuspannung der Bremse ein gewisses Betätigungsspiel bezüglich des Keils der Selbstverstärkungseinrichtung wieder herzustellen, das es dem Keil ermöglicht, bei auf das Fahrzeug wirkenden äußeren Kräften, die das Fahrzeug zu verschieben trachten, die Radbremse noch fester zuzuspannen. Der Begriff "kraftlos" meint hier eine im Vergleich zur zuvor stattfindenden Zuspannung vernachlässigbar geringe Kraft.

Gemäß einer bevorzugten Ausführungsform der vorgenannten Kraftfahrzeugbremsanlage erfolgt die weggesteuerte Zuspannung über einen vorbestimmten Zustellweg bis zu einer vorbestimmten Zuspannkraft und wird dann beendet, wenn entweder der vorbestimmte Zustellweg oder die vorbestimmte Zuspannkraft erreicht ist. Damit wird sicher verhindert, dass eine durch den vorhergehenden Betrieb sehr heiße Radbremse zu fest zugespannt wird. Weil sich bei einer heißen Radbremse die zum Bremsvorgang beitragenden Bauteile ausdehnen, würde eine ausschließlich weggesteuerte Zuspannung zu einer deutlich zu hohen Zuspannkraft führen. Die zusätzliche Überwachung der beim Zuspannvorgang erreichten Zuspannkraft verhindert dies, indem der Zuspannvorgang abgebrochen wird, wenn die vorbestimmte Zuspannkraft erreicht ist, auch wenn der vorbestimmte Zustellweg noch nicht durchlaufen worden ist. Bei einer solchen Ausführungsform erfolgt die kraftlose Nachführung des Aktuators der Bremse nur dann, wenn der vorbestimmte Zustellweg erreicht worden ist. Ist der Zuspannvorgang durch Erreichen der vorbestimmten Zuspannkraft abgebrochen worden, kann mit einer "kraftlosen" Nachführung des Aktuators nämlich kein Betätigungsspiel am Keil wiederhergestellt werden.

Die zuvor erwähnte, vorbestimmte Zuspannkraft ist vorteilhaft ein Bruchteil der maximalen Aktuatorkraft, sie beträgt beispielsweise 30% der maximal vom Aktuator erzeugbaren Kraft.

Zur Erhaltung der Parkbremsfunktion erfolgt vorteilhaft nach einer vorbestimmten Zeitspanne und/oder in Abhängigkeit der Temperatur von für die Zuspannung relevanten Bremsenbauteilen eine weitere Zuspannung der Radbremse bis zu einer vorbestimmten Zuspannkraft, die dieselbe wie die zuvor erwähnte vorbestimmte Zuspannkraft sein kann. Die vorbestimmte Zeitspanne wird beispielsweise so gewählt, dass eine zunächst heiße Bremse abkühlen kann und die kraftgesteuerte Zuspannung dann quasi ein Nachspannen bewirkt. Alternativ oder zusätzlich kann die kraftgesteuerte Zuspannung temperaturabhängig erfolgen, beispielsweise in Abhängigkeit der Temperatur einer Bremsscheibe, eines Bremssattels oder ähnlicher, für die Zuspannung der Bremse relevanter Bremsenbauteile. Da eine zunächst eingestellte Zuspannkraft mit sinkender Temperatur der Bremse abnimmt, ist auf diese Weise gewährleistet, dass eine gewünschte Haltekraft auch über lange Zeiträume sicher aufrechterhalten wird. Die weitere Zuspannung der Radbremse kann einen oder auch mehrere Zuspannvorgänge umfassen.

Es wurde bereits erwähnt, dass bei einer selbstverstärkenden elektromechanischen Radbremse äußere auf das Fahrzeug wirkende Kräfte in der Parkbremsstellung eine selbsttätige weitere Zuspannung der Radbremse bewirken können. Dies ist möglich, weil die zur Selbstverstärkung verwendete Keilanordnung, auf die der Aktuator der Bremse wirkt, ein gewisses Spiel zwischen dem Betätigungselement des Aktuators und dem Keil aufweist, auf den das Betätigungselement des Aktuators einwirkt. Eine selbsttätige weitere Zuspannung der Radbremse in Parkbremsstellung kann deshalb so weit erfolgen, bis das erwähnte Spiel aufgebraucht ist. Um nach dem Einwirken äußerer Kräfte auf ein mittels der Parkbremsfunktion der erfindungsgemäßen Kraftfahrzeugbremsanlage gesichertes Fahrzeug wieder einen Zustand herzustellen, in dem eine weitere selbsttätige Zuspannung der Radbremsen aufgrund äußerer Kräfte möglich ist, erfolgt gemäß einer bevorzugten Ausgestaltung eine kraftlose Nachführung des Aktuators jeder an der Parkbremsfunktion teilnehmenden Radbremse dann, wenn das zwischen dem Aktuator und dem Keil vorhandene Spiel in Feststellrichtung aufgebraucht ist. Die kraftlose Nachführung soll also nur das erwähnte Spiel wieder herstellen, nicht jedoch eine zusätzliche Feststellkraft aufbringen.

Bei den oben beschriebenen Ausführungsbeispielen ist optional ein Nachspannen der Bremse vorgesehen, um die beim Abkühlen einer heißen Bremse auftretende Spannkraftverringerung auszugleichen und ein sicheres Festhalten des Fahrzeugs mittels der in Parkbremsstellung befindlichen Bremse(n) zu gewährleisten. Unter ganz besonders widrigen Betriebsbedingungen, insbesondere bei extrem heißer Bremse, kann der Reibungskoeffizient µ kleiner als der Tangens des Keilwinkels α sein, was dazu führt, dass die Bremse nicht mehr selbsthemmend ist. Eine Bremswirkung in der Parkbremsstellung lässt sich unter solchen Umständen nur durch eine ständige Aktuatorkraft erzielen. Dies ist, weil ständig elektrische Energie erfordernd, unbefriedigend.

Gemäß einem abgewandelten Ausführungsbeispiel der erfindungsgemäßen Kraftfahrzeugbremsanlage sind deshalb zwischen dem die Bremse in der Parkbremsfunktion zuspannenden Aktuator und dem zugehörigen Reibglied federnd elastische Mittel angeordnet und der Aktuator ist festsetzbar, d.h. blockierbar ausgeführt. Die federnd elastischen Mittel können beispielsweise durch eine Schraubenfeder gebildet sein. Vorzugsweise wirken die federnd elastischen Mittel auf die Keilanordnung der Selbstverstärkungseinrichtung, d.h. die federnd elastischen Mittel stützen sich an dem dann blockierten Aktuator ab und sorgen für eine fortwährende Betätigungskraft, ohne dass zur Erzeugung dieser Betätigungskraft ständig Energie benötigt wird. Die gewünschte Feststellwirkung der Parkbremse ist somit auch unter extrem ungünstigen Betriebsbedingungen ohne eine ständige Zufuhr elektrischer Energie gewährleistet. Bei einer solchen Ausgestaltung braucht der Steigungswinkel der genannten Keilflächen nicht derart gewählt zu sein, dass die Radbremsen jedenfalls bei normalerweise vorherrschenden Reibungskoeffizienten zwischen dem Reibglied und dem abzubremsenden Bauteil der Radbremse selbsthemmend sind.

Gemäß einer bevorzugten Weiterbildung der erfindungsgemäßen Kraftfahrzeugbremsanlage erfolgt an Steigungen eine Aktivierung der Parkbremsfunktion automatisch nach Erreichen des Fahrzeugstillstandes aus einer Vorwärtsfahrt. Auf diese Weise wird ein ungewolltes Zurückrollen des Fahrzeuges weitgehend verhindert. Damit die Kraftfahrzeugbremsanlage erkennen kann, ob das Fahrzeug eine Steigung hinauf fährt, kann entweder ein geeigneter Sensor vorgesehen sein, beispielsweise ein Neigungssensor, oder es kann die Information eines anderen Fahrzeugssystems ausgenutzt werden, das einen Sensor umfasst, der Neigungen des Fahrzeugs erkennen kann. Beispielsweise sind moderne Diebstahlwarnanlagen häufig mit einem Neigungssensor ausgerüstet.

Bei einer vorteilhaften Ausgestaltung der soeben erwähnten Ausführungsform erfolgt die Aktivierung der Parkbremsfunktion erst, wenn die Betriebsbremse gelöst wird. Dem liegt die Überlegung zugrunde, dass ein Zurückrollen des Fahrzeuges nicht auftreten kann, solange die Betriebsbremse betätigt ist, so dass durch diese Ausgestaltung unnötige Aktivierungen der Parkbremsfunktion vermieden werden. Gemäß einer noch weitergebildeten Ausgestaltung erfolgt die Aktivierung der Parkbremsfunktion erst eine vorbestimmte Zeitdauer nach dem Lösen der Betriebsbremse. Auf diese Weise soll ermöglicht werden, dass der Fahrer eines Fahrzeugs nach dem erreichten Fahrzeugstillstand einen normalen Anfahrvorgang ausführen kann, etwa durch Einlegen des ersten Gangs und anschließendes Einkuppeln, ohne dass die Parkbremsfunktion schon aktiviert wird. Erst nach einer vorbestimmten Zeitdauer, die beispielsweise so gewählt sein kann, dass ein normaler Anfahrvorgang abgeschlossen sein muss, erfolgt gegebenenfalls, d.h. wenn das Fahrzeug zurückrollt, die Aktivierung der Parkbremsfunktion. Ein länger andauerndes, ungewolltes Zurückrollen des Fahrzeuges wird so verhindert.

Zusätzlich zum Auslösen der Parkbremsfunktion nach Erreichen des Fahrzeugstillstandes aus einer Vorwärtsfahrt kann bei abgewandelten Ausführungsformen der zuvor beschriebenen Kraftfahrzeugbremsanlage auch eine Aktivierung der Parkbremsfunktion automatisch nach Erreichen des Fahrzeugstillstandes aus einer Rückwärtsfahrt erfolgen. Damit ein gewolltes Rückwärtsfahren möglich ist, erfolgt diese automatische Aktivierung der Parkbremsfunktion vorzugsweise nur dann, wenn kein Gang des Fahrzeuggetriebes eingelegt ist. Mit "Gang" sind hier insbesondere der Rückwärtsgang und/oder der erste Gang gemeint.

Gemäß einer weiteren Abwandlung der zuvor diskutierten Kraftfahrzeugbremsanlage, bei der die Aktivierung der Parkbremsfunktion an Steigungen automatisch zumindest nach Erreichen des Fahrzeugstillstandes aus einer Vorwärtsfahrt erfolgt, erfolgt diese Aktivierung ferner nur dann, wenn ein vorbestimmtes Reibmoment in Rückwärtsrollrichtung überschritten ist. Zu einer automatischen Aktivierung der Parkbremsfunktion kommt es demnach nur dann, wenn trotz betätigter Betriebsbremse ein Zurückrollen des Fahrzeuges auftritt. Es wird dann angenommen, dass ein solches Zurückrollen ungewollt stattfindet, und die dann zur Wirkung kommende Parkbremsfunktion verhindert ein weiteres Zurückrollen. Das Reibmoment in Rückwärtsrollrichtung kann beispielsweise mit Hilfe von Sensoren ermittelt werden, die an der selbstverstärkenden elektromechanischen Radbremse zur Reibmomentregelung während einer Betriebsbremsung ohnehin vorhanden sind.

Alle Ausführungsformen der erfindungsgemäßen Kraftfahrzeugbremsanlage sind vorzugsweise so ausgestaltet, dass eine Aktivierung der Parkbremsfunktion automatisch mit dem Abstellen des Kraftfahrzeugmotors erfolgt. Ausgegangen wird hierbei von der Überlegung, dass nach dem Abstellen des Kraftfahrzeugmotors keine Bewegung des Fahrzeuges mehr erwünscht ist. Für besondere Situationen, beispielsweise um das Schieben oder Abschleppen eines defekten Fahrzeuges zu ermöglichen, ist dann vorzugsweise ein Schalter vorhanden, der die Aufhebung der automatischen Aktivierung bewirkt.

Die vorliegende Erfindung stellt auch eine elektromechanische Radbremse zur Verwendung in einer erfindungsgemäßen Kraftfahrzeugbremsanlage bereit, die einen elektrischen Aktuator zur Erzeugung einer Betätigungskraft und eine Selbstverstärkungseinrichtung zur Selbstverstärkung der vom Aktuator erzeugten Betätigungskraft umfasst, um ein Reibglied gegen ein drehbares, abzubremsendes Bauteil der Bremse zu drücken, beispielsweise gegen eine Bremsscheibe. Die Selbstverstärkungseinrichtung weist einen sich an einem zugehörigen Widerlager abstützenden Keil mit wenigstens einer Keilfläche auf, die unter einem Steigungswinkel angeordnet ist, der so ausgewählt ist, dass die Radbremse jedenfalls bei normalerweise vorherrschenden Reibungskoeffizienten zwischen Reibglied und Bremsscheibe selbsthemmend ist. Der Aktuator hat zwei Antriebe, die so ausgestaltet sind, dass sie gleich- oder gegensinnig auf den Keil wirken können, um bei Betriebsbremsungen eine spielfreie Betätigung des Keils zu ermöglichen, und um ferner in einer Parkbremsstellung der Bremse dem Keil ein Spiel geben zu können, das eine selbsttätige weitere Zuspannung der Radbremse durch äußere auf das Fahrzeug wirkende Kräfte ermöglicht.

Vorzugsweise ist das oder jedes Reibglied mit einem Reibbelag versehen, der einen großen Haftwertsprung zwischen Haft- und Gleitreibung aufweist. Bei herkömmlichen Bremsen ist ein großer Haftwertsprung zwischen Haft- und Gleitreibung nicht gewünscht, vielmehr soll dieser Haftwertsprung dort möglichst klein sein, um einen möglichst ruckfreien Bremsvorgang bis zum Fahrzeugstillstand zu erreichen. Bei einer erfindungsgemäßen Radbremse hingegen ist ein großer Haftwertsprung insbesondere für die Parkbremsfunktion vorteilhaft, denn dadurch wird nach dem ersten wegkontrollierten Zuspannen jeder Radbremse in der Parkfunktion vermieden, dass bereits kleine äußere auf das stillstehende Fahrzeug wirkende Kräfte ein "Durchrutschen" der Radbremsen und damit eine Bewegung des Fahrzeugs verursachen. Des weiteren stellt die im Vergleich zur Gleitreibung deutlich größere Haftreibung sicher, dass in der Parkbremsfunktion die selbsttätige weitere Zuspannung der Radbremsen aufgrund äußerer, auf das Fahrzeug wirkender Kräfte erfolgt.

Wie bereits erwähnt, kann unter sehr ungünstigen Betriebsbedingungen, insbesondere bei extrem heißer Bremse, der Haftreibungskoeffizient µ zwischen dem Reibglied und der Bremsscheibe kleiner als der Tangens des Keilwinkels α werden, wodurch die Bremse dann nicht mehr selbsthemmend ist. Das bedeutet, dass in der Parkbremsstellung ständig eine Aktuatorkraft aufgebracht werden müsste, um die gewünschte Feststellwirkung zu erzielen. Um dies zu vermeiden, ist gemäß einem Ausführungsbeispiel der erfindungsgemäßen elektromechanischen Radbremse vorgesehen, dass der Aktuator der Bremse wahlweise festsetzbar, d.h. blockierbar ist, und dass zwischen dem Aktuator und dem Reibglied federnd elastische Mittel wirken, die eine Zuspannkraft auf das Reibglied ausüben. Die federnd elastischen Mittel können beispielsweise durch eine in der Parkbremsstellung Druck ausübende Schraubenfeder gebildet sein. In der Parkbremsstellung stützen sich die federnd elastischen Mittel an dem dann gegen eine Verschiebung blockierten Aktuator ab und üben ständig eine Kraft auf das Reibglied aus. Vorzugsweise wirken die federnd elastischen Mittel auf den Keil der Selbstverstärkungseinrichtung der erfindungsgemäßen elektromechanischen Bremse.

Gemäß einem Ausführungsbeispiel umfasst der elektrische Aktuator der Radbremse zwei als Linearaktuatoren ausgeführte Antriebe, die beide über je eine Schubstange mit dem Keil der Selbstverstärkungseinrichtung in Wirkverbindung stehen. Die beiden Linearaktuatoren können bei einer Bremsbetätigung je nach Betriebszustand gleich-oder gegensinnig arbeiten. Bei einer Ausführungsform sind die in der Parkbremsstellung eine Druckkraft ausübenden federnd elastischen Mittel zwischen den Enden der Schubstangen der beiden Linearaktuatoren angeordnet. In einer anderen Ausführungsform sind die federnd elastischen Mittel zwischen dem Ende der Schubstange des die Bremse in die Parkbremsstellung bringenden Linearaktuators und der Keilanordnung der Selbstverstärkungseinrichtung angeordnet. Bei allen zuvor beschriebenen Ausführungsbeispielen sorgen die federnd elastischen Mittel auch unter den angesprochenen, ungünstigen Betriebsbedingungen ohne eine Stromzufuhr für die erwünschte Feststellwirkung der Radbremse.

Bei einer bevorzugten Ausführungsform der erfindungsgemäßen selbstverstärkenden elektromechanischen Radbremse ist zum Lösen der Radbremse aus der Parkbremsstellung unter ungünstigen Betriebsbedingungen, beispielsweise nach langen stillstandsperioden, ein zusätzlicher separater Antrieb vorhanden. Dieser Antrieb umfasst vorzugsweise ein untersetzendes Schneckengetriebe, damit der Antrieb klein gehalten werden kann. In einer vorteilhaften Ausgestaltung sind das Schneckengetriebe und der separate Antrieb Bestandteile einer Nachstelleinrichtung der Radbremse zum Ausgleich von Reibbelagverschleiß.

Ausführungsbeispiele einer erfindungsgemäßen Bremse werden im folgenden anhand der beigefügten, schematischen Figuren näher erläutert. Es zeigt:
- Fig. 1: eine als Scheibenbremse ausgeführte erfindungsgemäße elektromechanische Bremse von der Seite,
- Fig. 2: eine räumliche Ansicht der erfindungsgemäßen Bremse von schräg unten,
- Fig. 3: die Ansicht aus Fig. 2 ohne Nachstellvorrichtung und Widerlager,
- Fig. 4: den Schnitt II-II aus Fig. 1,
- Fig. 5: den Schnitt III-III aus Fig. 1,
- Fig. 6: den Schnitt IV-IV aus Fig. 4,
- Fig. 7: eine Schnittansicht gemäß Fig. 4, die den betätigten Zustand der erfindungsgemäßen Bremse bei Vorwärtsfahrt darstellt,
- Fig. 8: die Schnittansicht aus Fig. 7, nun jedoch für einen betätigten Zustand der Bremse bei Rückwärtsfahrt,
- Fig. 9: den Schnitt V-V aus Fig. 4,
- Fig. 10: die Schnittansicht aus Fig. 4 mit weitgehend abgenutzten Reibbelägen,
- Fig. 11: ein die grundsätzliche Funktion der erfindungsgemäßen Bremse illustrierendes Schaubild,
- Fig. 12: ein abgewandeltes Ausführungsbeispiel einer als Scheibenbremse ausgeführten erfindungsgemäßen elektromechanischen Bremse im Schnitt, wobei in Fig. 12 der gelöste Zustand der Bremse wiedergegeben ist,
- Fig. 13: die Ansicht aus Fig. 12 für einen betätigten Zustand der Bremse, und
- Fig. 14: ein gegenüber den Fig. 12 und 13 abgewandeltes Ausführungsbeispiel.

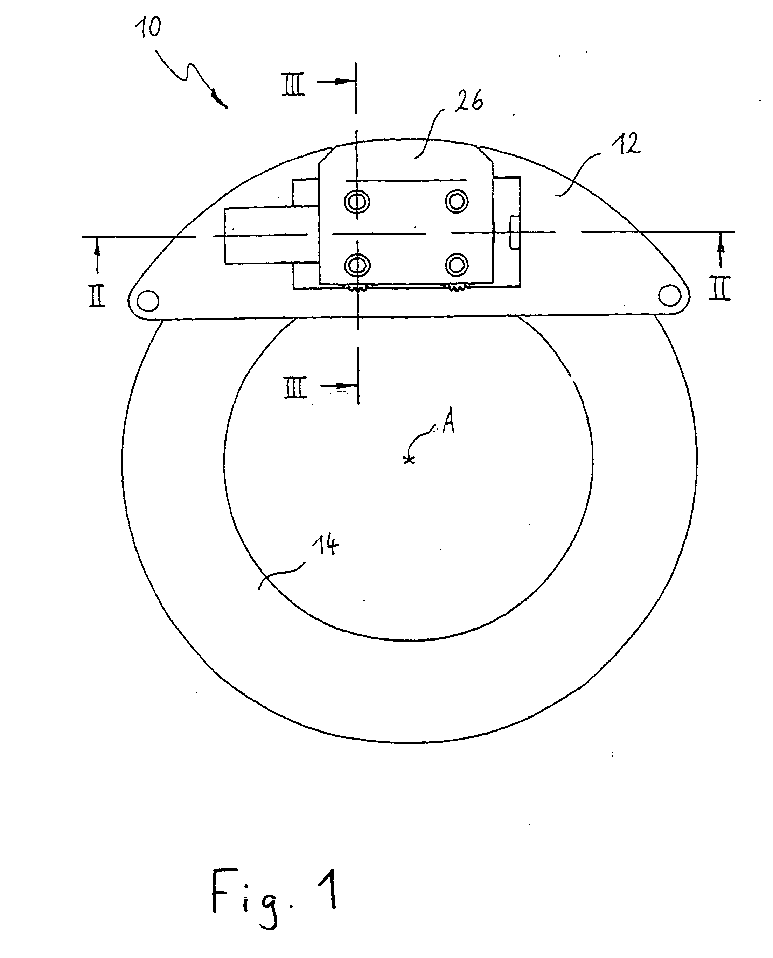

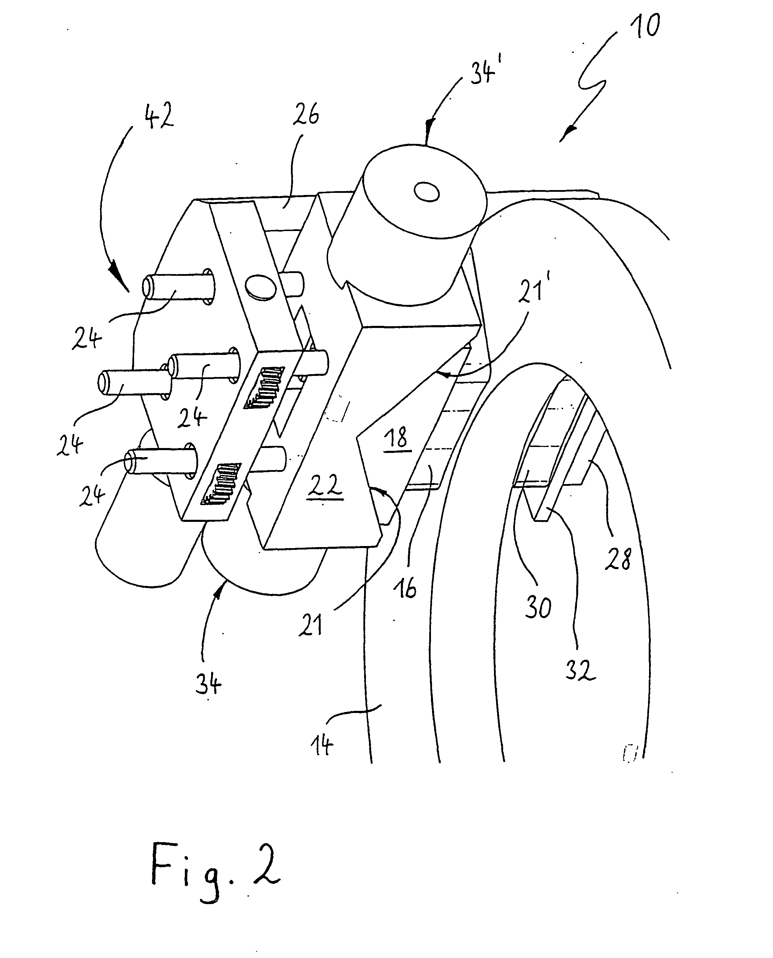

Die Fig. 1 und 2 zeigen eine als Scheibenbremse ausgebildete elektromechanische Bremse 10 mit einem Gehäuse 12 und einer um eine Achse A drehbaren Bremsscheibe 14.

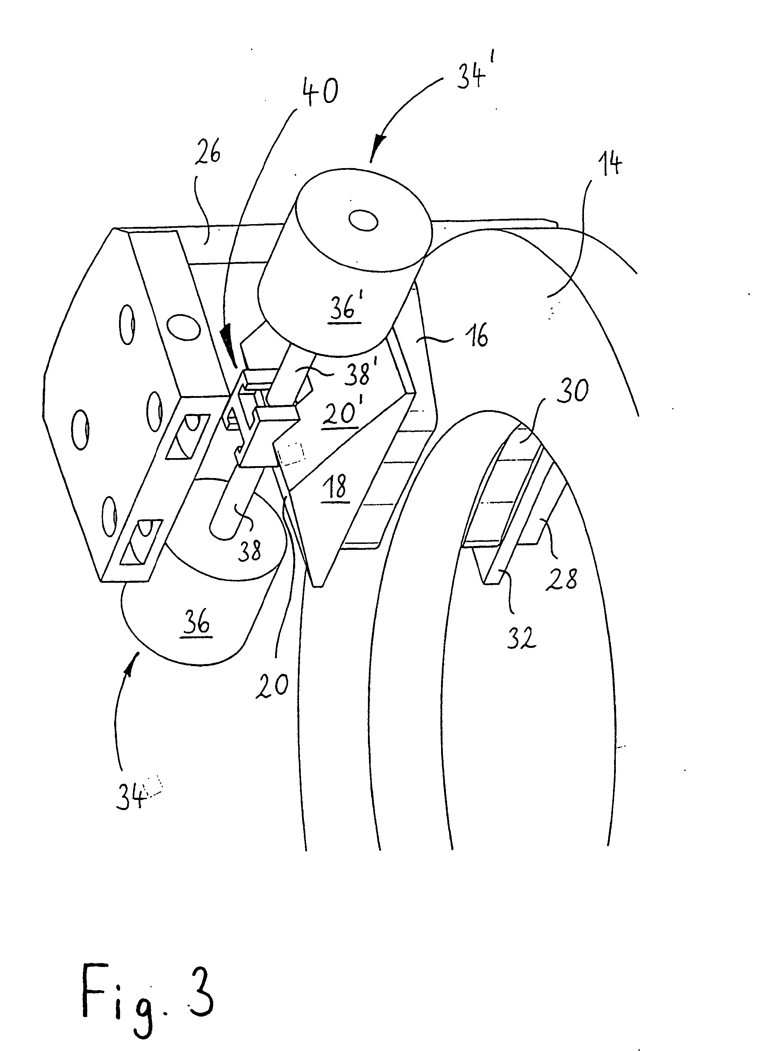

Wie besser aus den Fig. 3, 4 und 5 ersichtlich, weist die Bremse 10 einen ersten Reibbelag 16 auf, der mit der Vorderseite eines als Belagträger dienenden Keiles 18 fest verbunden ist, beispielsweise durch Kleben. Auf seiner Rückseite hat der Keil 18 für jede Drehrichtung der Bremsscheibe 14 eine Keilfläche 20 bzw. 20', die beide unter einem Steigungswinkel a zur Bremsscheibe 14 angeordnet sind und sich an komplementären Keilflächen 21, 21' eines blockförmigen Widerlagers 22 abstützen.

Das Widerlager 22 stützt sich über vier Gewindebolzen 24 an einem Bremssattel 26 (siehe Fig. 2 und 5) ab, der die Bremsscheibe 14 überspannt und einen zur Drehachse A hin gerichteten Arm 28 aufweist. Der Arm 28 dient zur Abstützung eines zweiten Reibbelages 30, der in üblicher Weise auf einer Belagträgerplatte 32 befestigt ist, die an der der Bremsscheibe 14 zugewandten Innenseite des Armes 28 anliegt.

Die Betätigungskraft der Bremse 10 wird von einem elektrischen Aktuator erzeugt, der zwei hier als Unearaktuatoren ausgeführte Antriebe 34 und 34' umfasst. Jeder Antrieb 34, 34' umfasst einen Elektromotor 36, 36' und eine von ihm angetriebene Schubstange 38, 38', die mit dem Keil 18 in Wirkverbindung steht. Im hier dargestellten Ausführungsbeispiel hat jeder Elektromotor 36, 36' eine integrierte Spindelmutter (nicht dargestellt) und die Schubstangen 38, 38' sind jeweils als mit der Spindelmutter zusammenwirkende Spindel ausgebildet. Ein ebenfalls nicht dargestellter Drehwinkelgeber in jedem Elektromotor 36, 36' ermöglicht die Bestimmung der genauen Position der zugehörigen Schubstange 38, 38' basierend auf den vom Elektromotor 36 oder 36' ausgeführten Umdrehungen und der Steigung des Spindeltriebes.

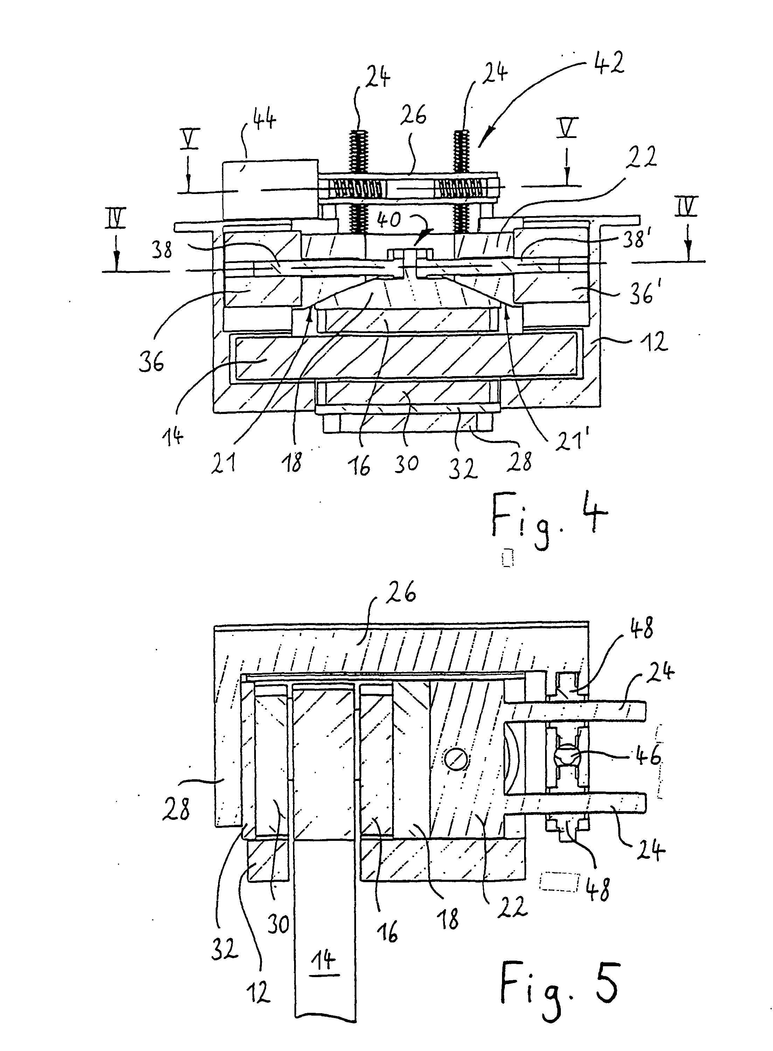

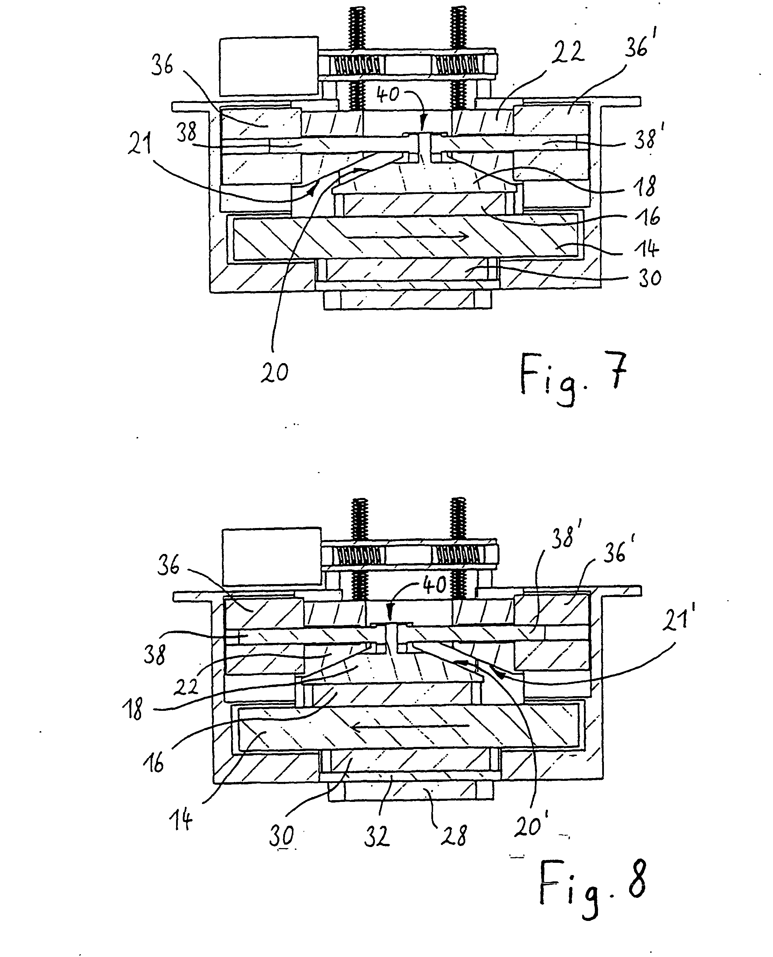

Der Keil 18 und das Widerlager 22 sind Teil einer Selbstverstärkungseinrichtung zur Verstärkung der von den Antrieben 34, 34' erzeugten Betätigungskraft. Hierzu sind die freien Enden der Schubstangen 38 und 38' in einer auf der Rückseite des Keiles 18 vorhandenen Aufnahme 40 so gelagert, dass eine Translationsbewegung der Schubstangen 38, 38' zu einer entsprechenden Verschiebung des Keiles 18 nach links oder rechts führt (siehe Fig. 3, 4 und 6). Zum Betätigen der Bremse 10 wird also der Keil 18 mit dem an ihm befestigten Reibbelag 16 in Drehrichtung der Bremsscheibe 14 verschoben (siehe Fig. 7 und 8), und zwar durch eine Translationsbewegung der beiden Schubstangen 38 und 38'. Dabei stützt sich der Keil 18 über seine eine Keilfläche 20 oder 20' an der zugehörigen, komplementären Keilfläche 21 oder 21' des Widerlagers 22 ab und bewegt sich nicht nur nach links oder rechts, sondern auch auf die Bremsscheibe 14 zu. Sobald der erste Reibbelag 16 in Kontakt mit der Bremsscheibe 14 kommt, entsteht eine Reaktionskraft, die von dem Reibbelag 16 über den Keil 18 und das Widerlager 22 auf den Bremssattel 26 übertragen wird. Letzterer ist schwimmend auf dem Gehäuse 12 der Bremse 10 gelagert und wird von der genannten Reaktionskraft solange verschoben, bis sich der zweite Reibbelag 30 ebenfalls an die Bremsscheibe 14 anlegt (Schwimmsattelprinzip). Jede weitere translatorische Verschiebung des Keiles 18 in Betätigungsrichtung führt nun zu einem stärkeren Anpressen der beiden Reibbeläge 16 und 30 an die Bremsscheibe 14 und damit zum gewünschten Bremsvorgang. Ein Lösen der Bremse erfolgt durch Rückverschiebung des Keiles 18 in seine in Fig. 4 wiedergegebene Ausgangsstellung. Zur Reibungsminderung können die Keilflächen 20, 20' und/oder die Widerlagerflächen 21, 21' beispielsweise mit Wälzkörpern (nicht dargestellt) versehen sein. Wie dargestellt, ist die Aufnahme 40 so ausgebildet, dass der Keil 18 sich in Richtung auf die Bremsscheibe 14 und von ihr weg bewegen kann, ohne dass die Schubstangen 38, 38' diese Bewegung mitmachen.

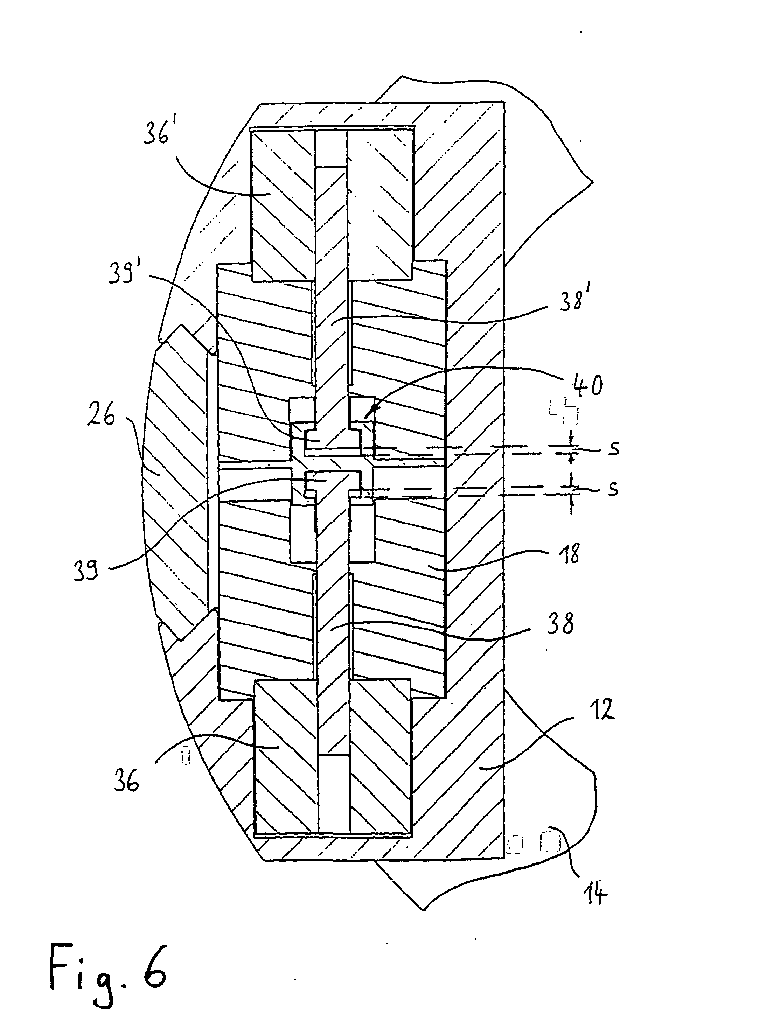

Wie Figur 6 erkennen lässt, liegen die die freien Enden der Schubstangen 38 und 38' bildenden Köpfe 39 und 39' in Betätigungsrichtung an entsprechenden Flächen der Aufnahme 40 an. Die Abmessungen der Schubstangenköpfe 39, 39' sind so gewählt, dass in der Aufnahme 40 auf der der Betätigungsrichtung abgewandten Seite jedes Kopfes 39, 39' ein Spiel s vorhanden ist. Dieses Spiel s ermöglicht es, nach einer zur Erzielung einer Parkbremsfunktion erfolgten Zuspannung der Bremse, dass äußere auf ein Fahrzeug wirkende Kräfte, die es zu verschieben trachten, eine selbsttätige weitere Zuspannung der Bremse bewirken, wodurch eine unerwünschte Bewegung des Fahrzeuges verhindert wird. Bei einer aufgrund auf das Fahrzeug wirkender äußerer Kräfte erfolgenden selbsttätigen weiteren Zuspannung wird das Spiel s aufgebraucht, d.h. eine selbsttätige weitere Zuspannung der Bremse kann nur solange erfolgen, bis die Aufnahme 40 mit ihren ursprünglich nicht in Kontakt mit den Köpfen 39 und 39' befindlichen Flächen gegen die Köpfe 39, 39' stößt. Das Spiel s hat sich dann auf die jeweils andere Seite der Köpfe 39, 39' verlagert. Durch eine praktisch kraftlose Nachführung der Schubstangenköpfe 39 und 39' kann der ursprünglich vorhandene Zustand wieder hergestellt werden, d.h. das Spiel s auf die in Figur 6 dargestellte Seite der Köpfe 39, 39' zurückverlagert werden. Ist auf diese Weise das ursprüngliche Spiel s wieder hergestellt, steht einer weiteren selbsttätigen Zuspannung der Bremse nichts mehr im Wege.

Die "kraftlose" Nachführung der Schubstangenköpfe 39, 39' oder allgemeiner ausgedrückt des elektrischen Aktuators erfolgt im Anschluss an eine weggesteuerte Zuspannung, die zu Beginn einer Parkbremsfunktion durchgeführt wird, um die Reibbeläge an die Bremsscheibe 14 anzulegen und eine gewisse Mindestzuspannkraft zu erzielen. Weil die Nachführung mit einer vemachlässigbar geringen Kraft erfolgt, werden die Schubstangenköpfe 39, 39' nur dann tatsächlich bewegt, wenn das ursprünglich vorhandene Spiel s bereits aufgebraucht ist, beispielsweise weil das Fahrzeug auf einer schrägen Fläche parkt und die auf das Fahrzeug wirkende Hangabtriebskraft unmittelbar im Anschluss an die anfänglich durchgeführte weggesteuerte Zuspannung zu einer selbsttätigen weiteren Zuspannung der Bremse geführt hat. Ist dagegen das ursprüngliche Spiel s noch vorhanden, führt die "kraftlose" Nachführung zu keiner Änderung der Verhältnisse und wird nach Ablauf einer vorbestimmten Zeitspanne abgebrochen.

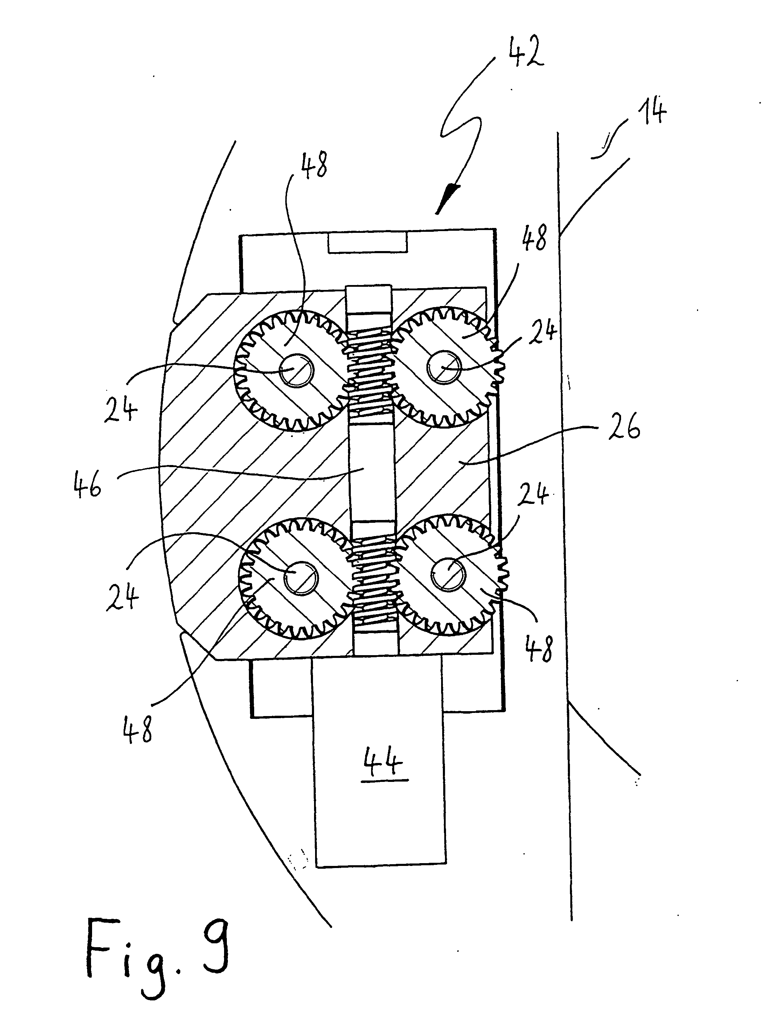

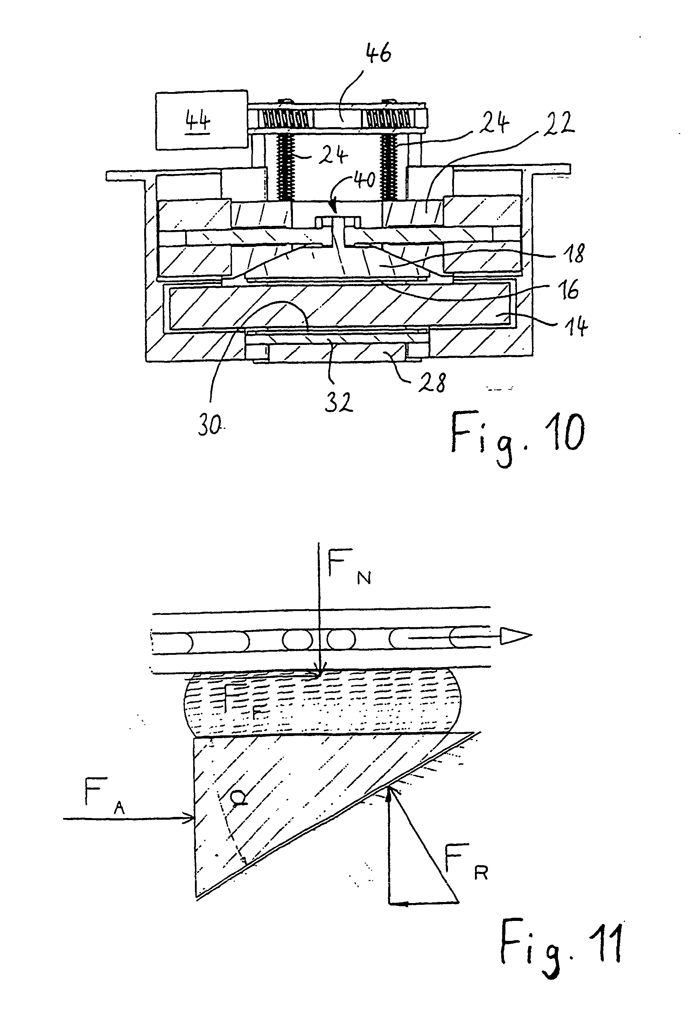

Damit die Bremse 10 einen sich abnutzenden Reibbelag 16 ausgleichen kann, ist eine allgemein mit 42 bezeichnete Nachstelleinrichtung vorhanden (siehe Fig. 2). Diese besteht (siehe Fig. 4, 5 und 9) aus einem Motor 44, der eine Schneckenwelle 46 treibt, die mit vier Zahnrädern 48 in Eingriff steht. Die Zahnräder 48 sind im Bremssattel 26 gelagert und weisen jeweils ein Innengewinde auf, das mit einem zugehörigen der Gewindebolzen 24 in Eingriff steht, welche mit dem Widerlager 22 fest verbunden sind (siehe Fig. 5). Die Zahnräder 48 fungieren demnach als Spindelmuttern eines Spindeltriebes, während die Gewindebolzen 24 die Spindelstangen darstellen. Im dargestellten Ausführungsbeispiel sind vier Gewindebolzen 24 vorhanden, von denen aufgrund des unterschiedlichen Drehsinnes der Zahnräder 48 zwei Gewindebolzen 24 ein Linksgewinde und die anderen beiden Gewindebolzen 24 ein Rechtsgewinde aufweisen. Mittels des Motors 44 kann die Nachstelleinrichtung 42 somit den Abstand des Widerlagers 22 vom Bremssattel 26 vergrößern, d.h. das Widerlager 22 in Richtung auf die Bremsscheibe 14 bewegen. Auf diese Weise kann das Lüftspiel der Bremse 10, d.h. der bei gelöster Bremse vorhandene Abstand zwischen der Bremsscheibe 14 und der Reibbelagoberfläche, konstant gehalten werden. Die Fig. 10 zeigt dies in einer Ansicht entsprechend Fig. 4, jedoch mit weitgehend abgenutzten Reibbelägen 16, 30.

Üblicherweise wird die Bremse 10 so ausgeführt sein, dass dann, wenn bei einer Bremsung ein zu großes Lüftspiel erkannt wird, eine Regelung die Nachstelleinrichtung 42 bei gelöster Bremse aktiviert, um das Lüftspiel wieder auf den konstruktiv vorgegebenen Wert zu verkleinern. Die Nachstelleinrichtung 42 ist vorzugsweise selbsthemmend ausgebildet, um eine unbeabsichtigte Verstellung des Lüftspieles zu verhindern.

Die hier beschriebene Nachstelieinrichtung 42 stellt eine Möglichkeit dar, den Reibbelagverschleiß auszugleichen. Andere Ausführungsformen der Bremse 10 können statt des genannten Elektromotors 44 einen UltraschaNmotor, ein Schrittschaltwerk, einen Schrittmotor oder einen anderen Antrieb aufweisen. Auch das Getriebe der Nachstelleinrichtung 42 kann abweichend ausgeführt sein, beispielsweise als Harmonikdrive-Getriebe. Des weiteren müssen nicht wie dargestellt, vier Gewindebolzen 24 vorhanden sein, sondern es können mehr oder weniger Gewindebolzen sein und es sind schließlich auch andere Mittel als Gewindebolzen denkbar, um die beschriebene Relatiwerschiebung des Widerlagers 22 zu erreichen.

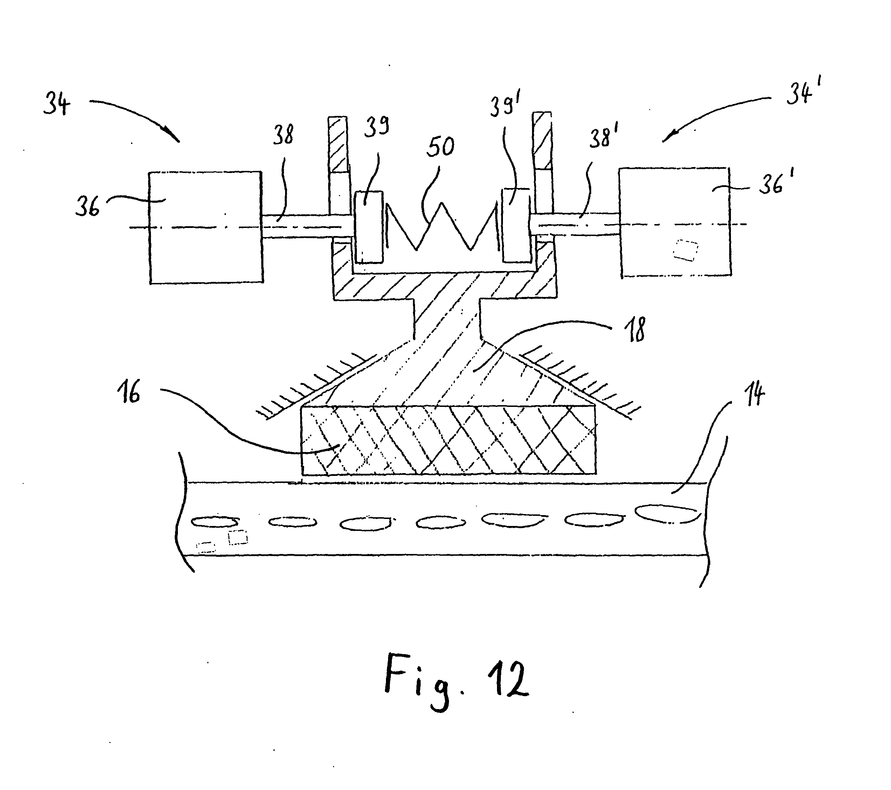

Im folgenden wird die Funktion der elektromechanischen Bremse 10 und insbesondere der Selbstverstärkungseinrichtung anhand der Fig. 11 näher erläutert. Es wurde bereits erwähnt, dass die Selbstverstärkungseinrichtung für jede Drehrichtung der Bremsscheibe 14 eine Keilfläche 20 bzw. 20' aufweist, die sich an einer komplementär ausgebildeten Fläche 21 bzw. 21' des Widerlagers 22 abstützt. Im dargestellten Ausführungsbeispiel ist jede Keilfläche 20, 20' bezüglich der Bremsscheibe 14 unter einem wirksamen Keilwinkel α angeordnet. Dies muss jedoch nicht so sein, stattdessen kann der wirksame Keilwinkel für die eine Drehrichtung sich vom wirksamen Keilwinkel für die andere Drehrichtung unterscheiden. In Fig. 11 sind mit Pfeilen die Kräfte angegeben, die auf den Keil 18 wirken.

Es sind dies
- F_{A}: die in den Keil 18 eingeleitete Eingangskraft,
- F_{R}: die sich bei einer Bremsung ergebende, vom Widerlager 22 abzustützende Auflagerkraft, die sich in eine der Eingangskraft F_{A} entgegengesetzte Kraft F_{Rx} und eine senkrecht zur Bremsscheibe stehende Druckkraft F_{Ry} aufteilen läßt,
- F_{N}: die der Kraft F_{Ry} entgegengerichtete Normalkraft an der Bremsscheibe, und
- F_{F}: die am Keil bzw. am Reibglied entstehende Reibkraft.

Gemäß diesem Kräftegleichgewicht hängt die Reibkraft bzw. das Reibmoment an der Bremsscheibe 14 entsprechend der Beziehung 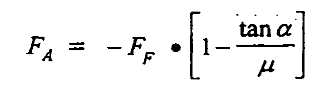 lediglich vom Steigungswinkel α, dem eine Störgröße darstellenden Reibungskoeffizient µ und der Eingangskraft F_{A} ab.

Die Eingangskraft F_{A}, die gemäß Fig. 11 bei einer Bremsbetätigung auf den Keil 18 wirkt, wird von den beiden Antrieben 34, 34' erzeugt. Bei gegebenem Reibungskoeffizienten µ hängt das Maß der Selbstverstärkung der eingeleiteten Kraft F_{A} nur vom Steigungswinkel α ab: Im Gleichgewichtszustand, d.h. wenn der Wert des Reibungskoeffizienten µ gleich dem Tangens des Steigungswinkels α ist, braucht die Bremse 10 - wenn der Reibbelag 16 in Kontakt mit der Bremsscheibe 14 ist - zur weiteren Bremsung keine Eingangskraft F_{A} mehr. Dieser Gleichgewichtszustand wird deshalb auch als der Punkt der optimalen Selbstverstärkung bezeichnet. Ist µ kleiner als tan α, muss eine Eingangskraft F_{A} vorhanden sein, um eine Bremsung aufrechtzuerhalten. Ist hingegen µ größer als tan α, läuft die Bremse von alleine zu, d.h. die Bremskraft verstärkt sich ohne Vorhandensein einer Eingangskraft F_{A} immer mehr bis zum Blockieren der Bremse. Soll dieser Blockierzustand vermieden bzw. eine gewünschte Bremskraft aufrechterhalten werden, muss eine negative Eingangskraft F_{A}, d.h. eine in entgegengesetzter Richtung wirkende Eingangskraft F_{A} auf den Keil 18 aufgebracht werden.

Damit die Eingangskraft F_{A} klein sein kann, ist man bestrebt, die Bremse 10 in einem Bereich zu betreiben, in dem der Reibungskoeffizient µ zumindest ungefähr gleich dem Tangens des Steigungswinkels α ist. In diesem Bereich geringer Betätigungskräfte arbeiten die beiden Antriebe 34 und 34' gegeneinander, d.h. die beiden Antriebe 34, 34' leiten über die Schubstangen 38, 38' einander entgegengerichtete Kräfte in den Keil 18 ein. Die entgegengerichteten Kräfte sind dabei so bemessen, dass ein Kraftüberschuss in der Richtung resultiert, in die der Keil 18 bei einer Betätigung verschoben werden soll. Die beiden von den Antrieben 34, 34' in den Keil 18 eingeleiteten Kräfte können beide Druckkräfte oder auch beide Zugkräfte sein, wichtig ist lediglich, dass ein Kraftüberschuss in der gewünschten Richtung resultiert.

Durch das gegensinnige Arbeiten der beiden Antriebe 34, 34' ist die Betätigung des Keiles 18 spielfrei. Diese Spielfreiheit ist für den Betrieb der Bremse 10 im Bereich der optimalen Selbstverstärkung wichtig, denn in diesem Bereich kann es aufgrund des sich während des Betriebes der Bremse ändernden Reibungskoeffizienten µ zu einem schnellen Wechsel zwischen Zuständen, in denen µ kleiner tan α ist, und Zuständen kommen, in denen µ größer tan α ist. Mit anderen Worten, in dem Bereich um den Punkt der optimalen Selbstverstärkung herum kann es einen schnellen Wechsel zwischen Zuständen geben, in denen eine positive Eingangskraft F_{A} gefordert ist, und Zuständen, in denen eine negative Eingangskraft F_{A} notwendig ist, um eine bestimmte, gewünschte Bremskraft aufrechtzuerhalten. Wäre der Aktuator nicht spielfrei, würde bei jedem Vorzeichenwechsel der Eingangskraft F_{A} das im Aktuator vorhandene Spiel durchlaufen werden, was zu undefinierten Zuständen und damit zu einer schlechten Regelbarkeit der Bremse führen würde. Die spielfreie Betätigung mittels der beiden im Normalfall gegensinnig arbeitenden Antriebe 34, 34' vermeidet dieses Problem wirkungsvoll.

In Betriebszuständen, in denen sich der Wert des Reibungskoeffizienten µ stark vom Tangens des Steigungswinkels α unterscheidet, sind größere Eingangskräfte F_{A} erforderlich, um eine gewünschte Bremswirkung zu erzielen. In solchen Betriebszuständen arbeiten die beiden Antriebe 34, 34' miteinander, d.h. sie erzeugen gleichgerichtete Kräfte, indem einer der Antriebe auf den Keil 18 drückt und der andere Antrieb am Keil 18 zieht. Damit ein solches gleichsinniges Wirken der Antriebe möglich ist, sind beide Antriebe 34, 34' umsteuerbar ausgeführt, d.h. ihre Betätigungsrichtung lässt sich umkehren. Im gleichsinnigen Betrieb der Antriebe 34, 34' arbeitet der Aktuator der Bremse 10 nicht mehr spietfrei. Dies ist in der Praxis jedoch vernachlässigbar, da Betriebszustände, in denen erhöhte Eingangskräfte F_{A} erforderlich sind, nur selten auftreten und darüber hinaus in solchen Betriebszuständen ein eventuelles Überfahren des Aktuatorspiels tolerierbar ist.

Wie bereits kurz angedeutet wurde, kann sich der Reibungskoeffizient µ in Abhängigkeit der Belastung der Bremse relativ stark ändern. Jede Reibwertänderung während eines Bremsvorgangs führt jedoch zu einer Änderung der Reibkraft F_{F} und somit zu einer sich ändernden Verzögerung des abzubremsenden Bauteiles der Bremse, welches vorliegend durch die Bremsscheibe 14 gebildet ist. Um diese unerwünschten Reibwertänderungen auszuregeln, ist die dargestellte Scheibenbremse 10 mit einer nicht gezeigten Sensorik versehen, die eine ständige Messung der Reibkraft gestattet. Diese an sich bekannte Sensorik ist mit einem ebenfalls nicht dargestellten, elektronischen Steuergerät verbunden, das die erhaltenen Signale auswertet und insbesondere einen Vergleich zwischen einem vorgegebenen Sollwert der Reibkraft und dem tatsächlichen Istwert der Reibkraft vornimmt. Entsprechend dieser Auswertung der Signale werden die Antriebe 34, 34' von dem Steuergerät so angesteuert, dass durch Verschieben des Keiles 18 in oder entgegen der Drehrichtung der Bremsscheibe 14 eine Erhöhung oder Erniedrigung des Istwertes der Reibkraft erreicht wird, um den Reibkraft-Istwert an den Reibkraft-Sollwert heranzuführen.

Die Reibkraftregelung der Bremse 10 wird im dargestellten Ausführungsbeispiel über eine Positionsregelung des Keiles 18 erreicht. Regelungstechnisch ist dies vorteilhaft, da zwischen der Keilposition und dem Reibungskoeffizienten µ lediglich ein linearer Zusammenhang besteht, der sich einfach, schnell und zuverlässig regeln lässt, beispielsweise mit einer Kaskadenregelung, die einen äußeren Regelkreis und einen inneren Regelkreis umfasst. Im äußeren Regelkreis ist das (gewünschte) Bremsmoment die Regelgröße, während die Keilposition die Stellgröße ist. Im inneren Regelkreis ist die Keilposition die Regelgröße, während die Stellgröße der Motorstrom oder auch die Motorspannung der Elektromotoren 36, 36' der Antriebe 34, 34' ist. Die Position des Keiles 18 lässt sich aufgrund der im Normalfall spielfreien Betätigung des Keiles 18 präzise durch die genannten Drehwinkelgeber bestimmen, die in den Elektromotoren 36, 36' enthalten sind.

Im gezeigten Ausführungsbeispiel ist der Steigungswinkel α über den Zustellweg der Bremse 10, genauer des Keiles 18, konstant. Bei nicht dargestellten Ausführungsformen ist der Steigungswinkel α degressiv, d.h. er nimmt mit fortschreitendem Zustellweg ab.

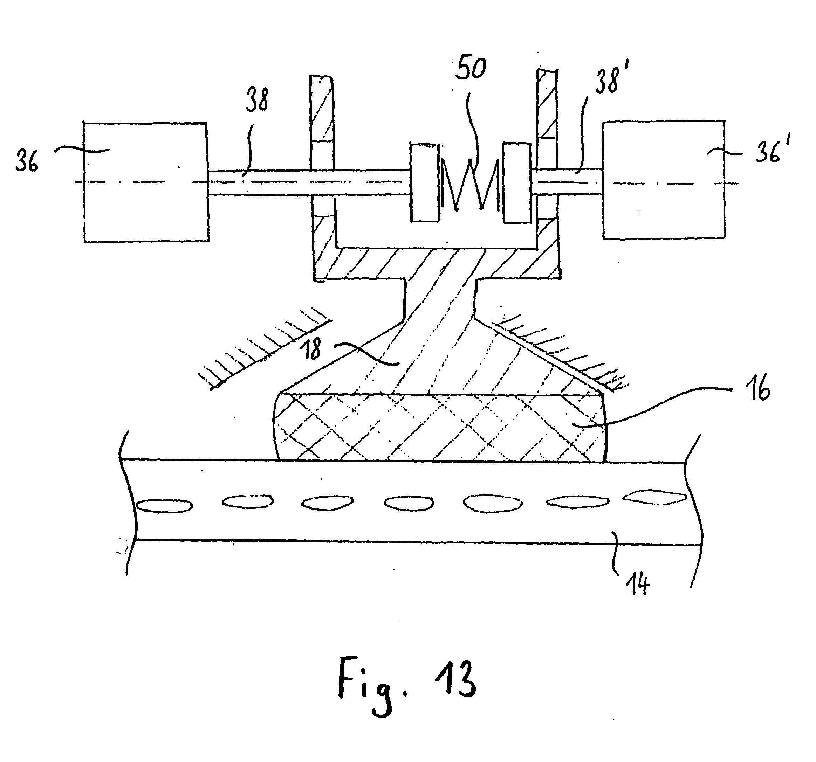

In Fig. 12 ist ein gegenüber dem zuvor beschriebenen Ausführungsbeispiel etwas abgewandeltes Ausführungsbeispiel der Bremse 10 dargestellt. Zwischen den Schubstangenköpfen 39 und 39' ist als federnd elastisches Mittel eine Feder 50 angeordnet. Bei einer Betätigung der Bremse 10 mittels der als Linearaktuatoren ausgebildeten Antriebe 34 und 34' wird die Feder 50 komprimiert (s. Fig. 13), so dass die Feder 50 dann in der Lage ist, eine Druckkraft auszuüben.

Wenn wie in Fig. 13 dargestellt zum Zustellen der Bremse 10, d.h. zum Bewegen des Reibbelages 16 zur Bremsscheibe 14 hin, der Keil 18 nach rechts verschoben werden soll, so geschieht dies, indem beide Antriebe 34 und 34' den Keil 18 nach rechts bewegen. In der in Fig. 13 wiedergegebenen Darstellung drückt die gespannte Feder 50 auf den rechten Antrieb 34' und über letzteren auf den Keil 18. Um dies zu erreichen, muss der linke Antrieb 34 in der Parkbremsstellung festgesetzt, d.h. gegen eine translatorische Verschiebung blockiert sein und der rechte Antrieb 34' darf nicht selbsthemmend ausgebildet sein. Das Festsetzen des linken Antriebs 34 kann beispielsweise durch eine hier nicht dargestellte Blockiervorrichtung für den Motor 36 des Antriebs 34 oder durch eine selbsthemmende Ausführung des mit dem Elektromotor 36 zusammenwirkenden Spindeltriebs erreicht werden. Die gespannte Feder 50 drückt demnach in der Parkbremsstellung ständig auf den Keil 18 und sorgt so für die gewünschte Feststellwirkung der Bremse 10 auch dann, wenn der Haftreibungskoeffizient µ aufgrund widriger Betriebsbedingungen so klein geworden sein sollte, dass die Bremse 10 nicht mehr selbsthemmend ist.

In der Regel genügt es, die Bremse 10 so auszubilden, dass die Feder 50 nur bezüglich einer Drehrichtung der Bremsscheibe 14 wirken kann, d.h. jede Bremse 10 in nur einer Richtung als Parkbremse arbeitet, z.B. die Vorderräder gegen eine Vorwärtsfahrt und die Hinterräder gegen eine Rückwärtsfahrt gesichert sind. Jedoch ist es ohne Weiteres auch möglich, die Feder 50 in der Parkbremsstellung bezüglich beider Drehrichtungen der Bremsscheibe 14 wirken zu lassen.

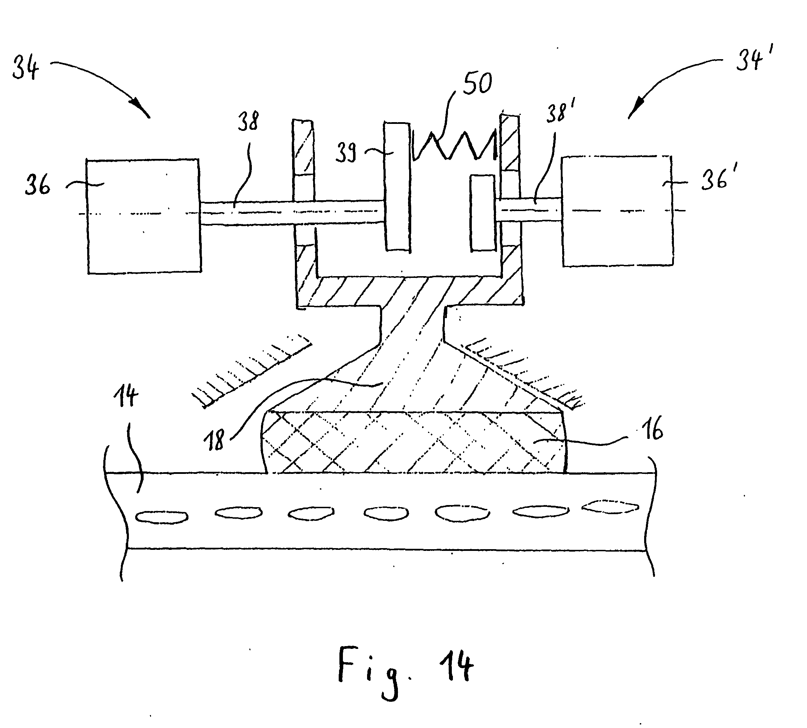

In Fig. 14 ist eine nochmals etwas abgewandelte Ausführungsform der Bremse 10 dargestellt, bei der die Feder 50 nicht zwischen den beiden Schubstangenköpfen 39 und 39', sondern zwischen dem Schubstangenkopf 39 und einem unmittelbar mit dem Keil 18 verbundenen Teil angeordnet ist. Bei einer solchen Ausführungsform kann auch der rechte Antrieb 34' selbsthemmend ausgeführt sein.

## Patentansprüche

1. Kraftfahrzeugbremsanlage, mit mindestens einer ersten und mindestens einer zweiten elektromechanischen Radbremse (10), die jeweils einen elektrischen Aktuator zur Erzeugung einer Betätigungskraft und eine Selbstverstärkungseinrichtung zur Selbstverstärkung der vom Aktuator erzeugten Betätigungskraft umfassen, um ein Reibglied gegen ein drehbares, abzubremsendes Bauteil (14) der Radbremse (10) zu drücken, wobei jede Selbstverstärkungseinrichtung einen sich an einem zugehörigen Widerlager (22) abstützenden Keil (18) mit wenigstens einer Keilfläche (20, 20') aufweist, die unter einem Steigungswinkel (α) angeordnet ist,
**dadurch gekennzeichnet, dass** zur Realisierung einer Parkbremsfunktion
- die Selbstverstärkungseinrichtung der ersten Radbremse wenigstens eine Keilfläche (20) aufweist, die zur Kraftverstärkung bei Bremsungen in Vorwärtsfahrt dient,
- die Selbstverstärkungseinrichtung der zweiten Radbremse wenigstens eine Keilfläche (20') aufweist, die zur Kraftverstärkung bei Bremsungen in Rückwärtsfahrt dient, und
- in der Parkbremsfunktion das Reibglied der ersten Radbremse unter Benutzung der zur Kraftverstärkung bei Bremsungen in Vorwärtsfahrt dienenden Keilfläche (20) und das Reibglied der zweiten Radbremse unter Benutzung der zur Kraftverstärkung bei Bremsungen in Rückwärtsfahrt dienenden Keilfläche (20') gegen das abzubremsende Bauteil der Radbremse (10) gespannt sind.

2. Kraftfahrzeugbremsanlage nach Anspruch 1,
**dadurch gekennzeichnet, dass** der Steigungswinkel (α) der genannten Keilflächen (20, 20') derart ausgewählt ist, dass die Radbremsen (10) jedenfalls bei normalerweise vorherrschenden Reibungskoeffizienten µ selbsthemmend sind.

3. Kraftfahrzeugbremsanlage nach Anspruch 2,
**dadurch gekennzeichnet, dass** zur Erzielung der Parkbremsfunktion zunächst eine weggesteuerte Zuspannung jeder an der Parkbremsfunktion teilnehmenden Radbremse (10) stattfindet, auf die eine kraftlose Nachführung des Aktuators jeder an der Parkbremsfunktion teilnehmenden Radbremse (10) folgt.

4. Kraftfahrzeugbremsanlage nach Anspruch 3,
**dadurch gekennzeichnet, dass** die weggesteuerte Zuspannung über einen vorbestimmten Zustellweg bis zu einer vorbestimmten Zuspannkraft erfolgt und beendet wird, wenn entweder der vorbestimmte Zustellweg oder die vorbestimmte Zuspannkraft erreicht ist, und dass die kraftlose Nachführung des Aktuators nur erfolgt, wenn der vorbestimmte Zustellweg erreicht worden ist.

5. Kraftfahrzeugbremsanlage nach Anspruch 4,
**dadurch gekennzeichnet, dass** die vorbestimmte Zuspannkraft ein Bruchteil der maximalen Aktuatorkraft ist, vorzugsweise 30 Prozent der maximalen Aktuatorkraft.

6. Kraftfahrzeugbremsanlage nach einem der Ansprüche 3 bis 5,
**dadurch gekennzeichnet, dass** zur Erhaltung der Parkbremsfunktion nach einer vorbestimmten Zeitspanne und/oder in Abhängigkeit der Temperatur für die Zuspannung relevanter Bremsenbauteile eine weitere Zuspannung bis zur vorbestimmten Zuspannkraft erfolgt.

7. Kraftfahrzeugbremsanfage nach einem der Ansprüche 3 bis 6,
**dadurch gekennzeichnet, dass** dann, wenn nach der weggesteuerten Zuspannung äußere auf das Fahrzeug wirkende Kräfte eine selbsttätige weitere Zuspannung der Radbremse bewirkt haben, eine weitere kraftlose Nachführung des Aktuators jeder an der Parkbremsfunktion teilnehmenden Radbremse (10) erfolgt.

8. Kraftfahrzeugbremsanlage nach einem der Ansprüche 1 bis 5,
**dadurch gekennzeichnet, dass** zwischen dem Aktuator, der jede an der Parkbremsfunktion teilnehmende Radbremse (10) zuspannt, und dem zugehörigen Reibglied der Radbremse (10) federnd elastische Mittel angeordnet sind, die in der Parkbremsstellung eine Zuspannkraft auf das Reibglied ausüben, und dass ferner der Aktuator blockierbar ausgeführt ist.

9. Kraftfahrzeugbremsanlage nach Anspruch 8,
**dadurch gekennzeichnet, dass** die federnd elastischen Mittel auf eine die Keilfläche (20, 20') enthaltende Keilanordnung der Selbstverstärkungseinrichtung wirken und sich mittelbar oder unmittelbar an dem blockierten Aktuator abstützen.

10. Kraftfahrzeugbremsanlage nach Anspruch 8 oder 9,
**dadurch gekennzeichnet, dass** die federnd elastischen Mittel durch eine Schraubenfeder gebildet sind.

11. Kraftfahrzeugbremsanlage nach einem der vorhergehenden Ansprüche,
**dadurch gekennzeichnet, dass** an Steigungen eine Aktivierung der Parkbremsfunktion automatisch nach Erreichen des Fahrzeugstillstandes aus einer Vorwärtsfahrt erfolgt, um einem Zurückrollen des Fahrzeuges entgegen zu wirken.

12. Kraftfahrzeugbremsanlage nach Anspruch 11,
**dadurch gekennzeichnet, dass** die Aktivierung der Parkbremsfunktion erst erfolgt, wenn die Betriebsbremse gelöst wird.

13. Kraftfahrzeugbremsanlage nach Anspruch 12,
**dadurch gekennzeichnet, dass** die Aktivierung der Parkbremsfunktion erst eine vorbestimmte Zeitdauer nach dem Lösen der Betriebsbremse erfolgt.

14. Kraftfahrzeugbremsanlage nach einem der Ansprüche 11 bis 13,
**dadurch gekennzeichnet, dass** an Steigungen eine Aktivierung der Parkbremsfunktion automatisch nach Erreichen des Fahrzeugstillstandes auch aus einer Rückwärtsfahrt erfolgt.

15. Kraftfahrzeugbremsanlage nach Anspruch 14,
**dadurch gekennzeichnet, dass** die Aktivierung der Parkbremsfunktion nur erfolgt, wenn kein Gang des Fahrzeuggetriebes eingelegt ist.

16. Kraftfahrzeugbremsanlage nach einem der Ansprüche 11, 13, 14 oder 15,
**dadurch gekennzeichnet, dass** die Aktivierung der Parkbremsfunktion nur erfolgt, wenn ein vorbestimmtes Reibmoment in Rückwärtsrollrichtung überschritten ist.

17. Kraftfahrzeugbremsanlage nach einem der vorhergehenden Ansprüche,
**dadurch gekennzeichnet, dass** eine Aktivierung der Parkbremsfunktion automatisch mit dem Abstellen des Kraftfahrzeugmotors erfolgt.

18. Elektromechanische Radbremse (10) zur Verwendung in einer Kraftfahrzeugbremsanlage gemäß einem der vorhergehenden Ansprüche, mit einem elektrischen Aktuator zur Erzeugung einer Betätigungskraft und einer Selbstverstärkungseinrichtung zur Selbstverstärkung der vom Aktuator erzeugten Betätigungskraft, um ein Reibglied gegen ein drehbares, abzubremsendes Bauteil (14) der Radbremse (10) zu drücken, wobei die Selbstverstärkungseinrichtung einen sich an einem zugehörigen Widerlager (22) abstützenden Keil (18) mit wenigstens einer Keilfläche (20, 20'), die unter einem Steigungswinkel (α) angeordnet ist, **dadurch gekennzeichnet, daß** der Aktuator zwei Antriebe (34, 34') aufweist, die so ausgestaltet sind, dass sie gleich- oder gegensinnig auf den Keil (18) wirken können, um bei Betriebsbremsungen eine spielfreie Betätigung des Keils (18) zu ermöglichen und in einer Parkbremsstellung dem Keil (18) ein Spiel zu geben, das eine selbsttätige weitere Zuspannung der Radbremse (10) durch äußere auf das Fahrzeug wirkende Kräfte ermöglicht.

19. Radbremse nach Anspruch 18,
**dadurch gekennzeichnet, dass** der Steigungswinkel (α) so ausgewählt ist, dass die Radbremse (10) jedenfalls bei normalerweise vorherrschenden Reibungskoeffizienten µ selbsthemmend ist.

20. Radbremse nach Anspruch 18 oder 19,
**dadurch gekennzeichnet, dass** das Reibglied oder die Reibglieder Reibbeläge (16, 30) mit einem großen Haftwertsprung zwischen Haft- und Gleitreibung aufweisen.

21. Radbremse nach einem der Ansprüche 18 bis 20,
**dadurch gekennzeichnet, dass** zwischen dem die Radbremse (10) in der Parkbremsfunktion zuspannenden Aktuator und dem zugehörigen Reibglied der Radbremse (10) federnd elastische Mittel angeordnet sind, die eine Zuspannkraft auf das Reibglied ausüben, und dass ferner der Aktuator blockierbar ausgeführt ist.

22. Radbremse nach Anspruch 21,
**dadurch gekennzeichnet, dass** der Aktuator einen Elektromotor (36, 36') mit einer Blockiervorrichtung umfasst.

23. Radbremse nach Anspruch 21,
**dadurch gekennzeichnet, dass** der Aktuator einen mit einem Elektromotor (36, 36') zusammenwirkenden, selbsthemmend ausgeführten Spindeltrieb umfasst.

24. Radbremse nach einem der Ansprüche 21 bis 23,
**dadurch gekennzeichnet, dass** die federnd elastischen Mittel auf eine die Keilfläche (20, 20') enthaltende Keilanordnung der Selbstverstärkungseinrichtung wirken und sich mittelbar oder unmittelbar an dem blockierten Aktuator abstützen.

25. Radbremse nach einem der Ansprüche 21 bis 24,
**dadurch gekennzeichnet, dass** die federnd elastischen Mittel durch eine in der Parkbremsstellung Druck ausübende Schraubenfeder gebildet sind.

26. Radbremse nach einem der Ansprüche 21 bis 25,
**dadurch gekennzeichnet, dass** die Antriebe (34, 34') als Linearaktuatoren ausgebildet sind, die über jeweils eine Schubstange (38, 38') mit einem Schubstangenkopf (39, 39') mit dem Keil (18) in Wirkverbindung stehen, und dass die in der Parkbremsstellung eine Zuspannkraft auf das Reibglied ausübenden federnd elastischen Mittel zwischen den Schubstangenköpfen (39, 39') angeordnet sind.

27. Radbremse nach einem der Ansprüche 21 bis 25,
**dadurch gekennzeichnet, dass** die Antriebe (34, 34') als Linearaktuatoren ausgebildet sind, die über jeweils eine Schubstange (38, 38') mit einem Schubstangenkopf (39, 39') mit dem Keil (18) in Wirkverbindung stehen, und dass die in der Parkbremsstellung eine Zuspannkraft auf das Reibglied ausübenden federnd elastischen Mittel zwischen dem Schubstangenkopf (39) des die Radbremse (10) in Parkbremsstellung bringenden Linearaktuators und einer den Keil (18) enthaltenden Keilanordnung angeordnet sind.

28. Radbremse nach einem der Ansprüche 18 bis 27,
**dadurch gekennzeichnet, dass** zum Lösen der Radbremse (10) aus der Parkbremsstellung ein zusätzlicher separater Antrieb vorhanden ist.

29. Radbremse nach Anspruch 28,
**dadurch gekennzeichnet, dass** der separate Antrieb ein Schneckengetriebe umfasst.

30. Radbremse nach Anspruch 29,
**dadurch gekennzeichnet, dass** das Schneckengetriebe (46, 48) und der Antrieb (44) Bestandteile einer Nachstelleinrichtung (42) zum Ausgleich von Reibbelagverschleiß sind.

## Claims

1. Motor vehicle brake system, having at least one first and at least one second electromechanical wheel brake (10), which each comprise an electric actuator for generating an actuating force and a self-boosting device for self-boosting the actuating force generated by the actuator in order to press a friction element against a rotatable component (14) of the wheel brake (10) that is to be braked, wherein each self-boosting device comprises a wedge (18), which is supported against an associated abutment (22) and has at least one wedge face (20, 20') disposed at an angle of slope (α),
**characterized in that** in order to realize a parking brake function
- the self-boosting device of the first wheel brake comprises at least one wedge face (20), which is used to boost the force in braking operations during forward travel,
- the self-boosting device of the second wheel brake comprises at least one wedge face (20'), which is used to boost the force in braking operations during reverse travel, and
- in the parking brake function the friction element of the first wheel brake, by utilizing the wedge face (20) used to boost the force in braking operations during forward travel, and the friction element of the second wheel brake, by utilizing the wedge face (20') used to boost the force in braking operations during reverse travel, are clamped against the component of the wheel brake (10) that is to be braked.

2. Motor vehicle brake system according to claim 1,
**characterized in that** the angle of slope (α) of the said wedge faces (20, 20') is selected in such a way that the wheel brakes (10) in any case with normally prevailing coefficients of friction µ are self-locking.

3. Motor vehicle brake system according to daim 2,
**characterized in that**, in order to achieve the parking brake function, initially a distance-controlled application of each wheel brake (10) participating in the parking brake function occurs and is followed by a zero-force correction of the actuator of each wheel brake (10) participating in the parking brake function.

4. Motor vehicle brake system according to claim 3,
**characterized in that** the distance-controlled brake application is effected over a predetermined infeed distance up to a predetermined brake application force and is terminated when either the predetermined infeed distance or the predetermined brake application force has been reached, and that the zero-force correction of the actuator is effected only when the predetermined infeed distance has been reached.

5. Motor vehicle brake system according to claim 4,
**characterized in that** the predetermined brake application force is a fraction of the maximum actuator force, preferably 30% of the maximum actuator force.

6. Motor vehicle brake system according to one of claims 3 to 5,
**characterized in that**, in order to maintain the parking brake function, after a predetermined time interval and/or in dependence upon the temperature of brake components relevant to the brake application a further brake application up to the predetermined brake application force is effected.

7. Motor vehicle brake system according to one of claims 3 to 6,
**characterized in that**, when after the distance-controlled brake application external forces acting upon the vehicle have brought about an automatic further application of the wheel brake, a further zero-force correction of the actuator of each wheel brake (10) participating in the parking brake function is effected.

8. Motor vehicle brake system according to one of claims 1 to 5,
**characterized in that** spring-elastic means are disposed between the actuator, which applies each wheel brake (10) participating in the parking brake function, and the associated friction element of the wheel brake (10) and in the parking brake position exert an application force upon the friction element, and that moreover the actuator is of a lockable design.

9. Motor vehicle brake system according to claim 8,
**characterized in that** the spring-elastic means act upon a wedge arrangement of the self-boosting device that comprises the wedge face (20, 20') and are supported indirectly or directly against the locked actuator.

10. Motor vehicle brake system according to claim 8 or 9,
**characterized in that** the spring-elastic means are constituted by a helical spring.

11. Motor vehicle brake system according to one of the preceding claims,
**characterized in that** on gradients an activation of the parking brake function is effected automatically after attainment of the stationary state of the vehicle from forward travel in order to combat a backward rolling of the vehicle.

12. Motor vehicle brake system according to claim 11,
**characterized in that** the activation of the parking brake function is effected only after the service brake has been released.

13. Motor vehicle brake system according to claim 12,
**characterized in that** the activation of the parking brake function is not effected until a predetermined length of time after release of the service brake.

14. Motor vehicle brake system according to one of claims 11 to 13,
**characterized in that** on gradients an activation of the parking brake function is effected automatically after attainment of the stationary state of the vehicle also from reverse travel.

15. Motor vehicle brake system according to claim 14,
**characterized in that** the activation of the parking brake function is effected only when no gear of the vehicle transmission is engaged.

16. Motor vehicle brake system according to one of claims 11, 13, 14 or 15,
**characterized in that** the activation of the parking brake function is effected only when a predetermined friction torque in backward rolling direction has been exceeded.

17. Motor vehicle brake system according to one of the preceding claims,
**characterized in that** an activation of the parking brake function is effected automatically with switching-off of the motor vehicle engine.

18. Electromechanical wheel brake (10) for use in a motor vehicle brake system according to one of the preceding claims, having an electric actuator for generating an actuating force and a self-boosting device for self- boosting the actuating force generated by the actuator in order to press a friction element against a rotatable component (14) of the wheel brake (10) that is to be braked, wherein the self-boosting device comprises a wedge (18), which is supported against an associated abutment (22) and has at least one wedge face (20, 20') disposed at an angle of slope (α), **characterized in that** the actuator comprises two drives (34, 34'), which are so designed that they may act in the same direction or in opposite directions upon the wedge (18) in order in service braking operations to enable a backlash-free actuation of the wedge (18) and in a parking brake position to give the wedge (18) a clearance that enables an automatic further application of the wheel brake (10) by means of external forces acting upon the vehicle.

19. Wheel brake according to claim 18,
**characterized in that** the angle of slope (α) is so selected that the wheel brake (10) in any case with normally prevailing coefficients of friction µ is self-locking.

20. Wheel brake according to claim 18 or 19,
**characterized in that** the friction element or the friction elements comprise(s) friction linings (16, 30) with a large jump in the coefficient of adhesion between static friction and sliding friction.

21. Wheel brake according to one of claims 18 to 20,
**characterized in that** spring-elastic means are disposed between the actuator, which applies the wheel brake (10) in the parking brake function, and the associated friction element of the wheel brake (10) and exert an application force upon the friction element, and that moreover the actuator is of a lockable design.

22. Wheel brake according to claim 21,
**characterized in that** the actuator comprises an electric motor (36, 36') with a locking apparatus.

23. Wheel brake according to claim 21,
**characterized in that** the actuator comprises a spindle mechanism of a self-locking design, which interacts with an electric motor (36, 36').

24. Wheel brake according to one of claims 21 to 23,
**characterized in that** the spring-elastic means act upon a wedge arrangement of the self-boosting device that comprises the wedge face (20, 20') and are supported indirectly or directly against the locked actuator.

25. Wheel brake according to one of claims 21 to 24,
**characterized in that** the spring-elastic means are constituted by a helical spring, which exerts a pressure in the parking brake position.

26. Wheel brake according to one of claims 21 to 25,
**characterized in that** the drives (34, 34') are designed as linear actuators, which are workingly connected in each case by a push rod (38, 38') having a push rod head (39, 39') to the wedge (18), and that the spring-elastic means, which in the parking brake position exert an application force upon the friction element, are disposed between the push rod heads (39, 39').

27. Wheel brake according to one of claims 21 to 25,
**characterized in that** the drives (34, 34') are designed as linear actuators, which are workingly connected in each case by a push rod (38, 38') having a push rod head (39, 39') to the wedge (18), and that the spring-elastic means, which in the parking brake position exert an application force upon the friction element, are disposed between the push rod head (39) of the linear actuator that brings the wheel brake (10) into parking brake position and a wedge arrangement comprising the wedge (18).

28. Wheel brake according to one of claims 18 to 27,
**characterized in that** an additional separate drive is provided for releasing the wheel brake (10) from the parking brake position.

29. Wheel brake according to claim 28,
**characterized in that** the separate drive is a worm gear.

30. Wheel brake according to claim 29,
**characterized in that** the worm gear (46, 48) and the drive (44) are components of an adjusting device (42) for compensating friction lining wear.

## Revendications

1. Système de freinage pour véhicule automobile, pourvu au moins d'un premier et au moins d'un deuxième frein de roue électromécanique (10) qui comportent chacun un actionneur électrique destiné à produire une force d'actionnement et un dispositif destiné à auto-amplifier la force d'actionnement produite par l'actionneur pour presser un organe de friction contre une pièce rotative (14) à freiner du frein de roue (10), chaque dispositif d'auto-amplification présentant un élément cunéiforme (18) prenant appui sur une butée associée (22) et comportant au moins une surface d'élément cunéiforme (20, 20') disposée selon un angle d'inclinaison (α),
**caractérisé en ce que**, pour pourvoir ledit système d'une fonction de frein de stationnement,
- le dispositif d'auto-amplification du premier frein de roue présente au moins une surface d'élément cunéiforme (20) servant à amplifier la force de freinage pendant les phases de freinage en marche avant,
- le dispositif d'auto-amplification du deuxième frein de roue présente au moins une surface d'élément cunéiforme (20') servant à amplifier la force de freinage pendant les phases de freinage en marche arrière, et,
- lorsque la fonction de frein de stationnement est activée, l'organe de friction du premier frein de roue est appliqué contre la pièce à freiner du frein de roue (10) par l'intermédiaire de la surface d'élément cunéiforme (20) servant à amplifier la force de freinage pendant les phases de freinage en marche avant, tandis que l'organe de friction du deuxième frein de roue est appliqué contre la pièce à freiner du frein de roue (10) par l'intermédiaire de la surface d'élément cunéiforme (20') servant à amplifier la force de freinage pendant les phases de freinage en marche arrière.

2. Système de freinage pour véhicule automobile selon la revendication 1,
**caractérisé en ce que** l'angle d'inclinaison (α) desdites surfaces d'élément cunéiforme (20, 20') est sélectionné de sorte que les freins de roue (10) sont autobloquants, en tout cas lorsque les coefficients de friction µ sont normalement prédominants.

3. Système de freinage pour véhicule automobile selon la revendication 2,
**caractérisé en ce que**, pour activer la fonction de frein de stationnement, il y a tout d'abord serrage à course contrôlée de chaque frein de roue (10) participant à la fonction de frein de stationnement, lequel serrage est suivi d'un guidage non forcé de l'actionneur de chaque frein de roue (10) participant à la fonction de frein de stationnement.

4. Système de freinage pour véhicule automobile selon la revendication 3,
**caractérisé en ce que** le serrage à course contrôlée intervient selon une course d'application prédéterminée jusqu'à une force de serrage prédéterminée et prend fin une fois atteinte soit la course d'application prédéterminée soit la force de serrage prédéterminée, et **en ce que** le guidage non forcé de l'actionneur intervient uniquement lorsque la course d'application prédéterminée a été atteinte.

5. Système de freinage pour véhicule automobile selon la revendication 4,
**caractérisé en ce que** la force de serrage prédéterminée représente une fraction de la force maximale de l'actionneur, de préférence égale à 30 pour cent de la force maximale de l'actionneur.

6. Système de freinage pour véhicule automobile selon l'une des revendications 3 à 5,
**caractérisé en ce que**, pour maintenir la fonction de frein de stationnement après un laps de temps prédéterminé et/ou en fonction de la température des composants de frein pertinents pour le serrage, un serrage supplémentaire intervient jusqu'à la force de serrage prédéterminée.

7. Système de freinage pour véhicule automobile selon l'une des revendications 3 à 6,
**caractérisé en ce qu'**un nouveau guidage non forcé de l'actionneur de chaque frein de roue (10) participant à la fonction de frein de stationnement intervient lorsque des forces extérieures agissant sur le véhicule ont provoqué un serrage supplémentaire automatique du frein de roue après le serrage à course contrôlée de ce dernier.

8. Système de freinage pour véhicule automobile selon l'une des revendications 1 à 5,
**caractérisé en ce que** des moyens élastiques faisant ressort sont disposés entre l'actionneur, qui assure le serrage de chaque frein de roue (10) participant à la fonction de frein de stationnement, et l'organe de friction correspondant du frein de roue, lesquels moyens exercent, en position de freinage de stationnement, une force de serrage sur l'organe de friction, et **en ce qu'**en outre l'actionneur est conçu de manière à être bloqué.

9. Système de freinage pour véhicule automobile selon la revendication 8, **caractérisé en ce que** les moyens élastiques faisant ressort agissent sur un agencement cunéiforme comportant la surface d'élément cunéiforme (20, 20') et monté sur le dispositif d'auto-amplification, et que les dits moyens prennent directement ou indirectement appui sur l'actionneur bloqué.

10. Système de freinage pour véhicule automobile selon la revendication 8 ou 9,
**caractérisé en ce que** les moyens élastiques faisant ressort sont constitués par un ressort cylindrique.

11. Système de freinage pour véhicule automobile selon l'une des revendications précitées,
**caractérisé en ce que**, dans les montées, l'activation de la fonction de frein de stationnement intervient automatiquement après la mise en arrêt du véhicule automobile depuis la marche avant, pour empêcher le véhicule de reculer.

12. Système de freinage pour véhicule automobile selon la revendication 11,
**caractérisé en ce que** l'activation de la fonction de frein de stationnement intervient uniquement lorsque le frein de service est desserré.

13. Système de freinage pour véhicule automobile selon la revendication 12,
**caractérisé en ce que** l'activation de la fonction de frein de stationnement intervient uniquement après un laps de temps prédéterminé, après que le frein de service a été desserré.

14. Système de freinage pour véhicule automobile selon l'une des revendications 11 à 13,
**caractérisé en ce que**, dans les montées, l'activation de la fonction de frein de stationnement intervient automatiquement après la mise en arrêt du véhicule également depuis la marche arrière.

15. Système de freinage pour véhicule automobile selon la revendication 14,
**caractérisé en ce que** l'activation de la fonction de frein de stationnement intervient uniquement lorsque la boîte à vitesses du véhicule automobile est au point mort.

16. Système de freinage pour véhicule automobile selon l'une des revendications 11, 13, 14 ou 15,
**caractérisé en ce que** l'activation de la fonction de frein de stationnement intervient uniquement lorsqu'un couple de friction prédéterminé est dépassé dans le sens du mouvement de recul.

17. Système de freinage pour véhicule automobile selon l'une des revendications précitées,
**caractérisé en ce que** l'activation de la fonction de frein de stationnement intervient automatiquement lors de la coupure du moteur du véhicule automobile.

18. Frein de roue électromécanique (10) destiné à être utilisé dans un système de freinage pour véhicule automobile conformément à l'une des revendications précitées, pourvu d'un actionneur électrique destiné à produire une force d'actionnement et un dispositif destiné à auto-amplifier la force d'actionnement produite par l'actionneur pour presser un organe de friction contre une pièce rotative (14) à freiner du frein de roue (10), le dispositif d'auto-amplification présentant un élément cunéiforme (18) en appui sur une butée associée (22) et comportant au moins une surface (20, 20') disposée selon un angle d'inclinaison (α),
**caractérisé en ce que** l'actionneur présente deux entraînements (34, 34') conçus de manière à agir dans un même sens ou dans un sens opposé sur l'élément cunéiforme (18) pour permettre, en phases de freinage de service, un actionnement sans jeu de l'élément cunéiforme (18) et donner à l'élément cunéiforme (18), en position de freinage de stationnement, un jeu qui permet un serrage supplémentaire automatique du frein de roue (10) sous l'effet de forces extérieures agissant sur le véhicule automobile.

19. Frein de roue selon la revendication 18,
**caractérisé en ce que** l'angle d'inclinaison (α) est sélectionné de sorte que le frein de roue (10) est autobloquant, en tout cas lorsque les coefficients de friction µ sont normalement prédominants.

20. Frein de roue selon la revendication 18 ou 19,
**caractérisé en ce que** l'organe ou les organes de friction présentent des garnitures de friction (16, 30) affichant une grande différence de coefficient d'adhérence entre la friction d'adhérence et la friction de glissement.

21. Frein de roue selon l'une des revendications 18 à 20,
**caractérisé en ce que** des moyens élastiques faisant ressort sont disposés entre l'actionneur, qui assure le serrage du frein de roue (10) lorsque la fonction de frein de stationnement est activée, et l'organe de friction correspondant du frein de roue (10), lesquels moyens exercent une force de serrage sur l'organe de friction, et **en ce qu'**en outre l'actionneur est conçu de manière à être bloqué.

22. Frein de roue selon la revendication 21,
**caractérisé en ce que** l'actionneur comporte un moteur électrique (36, 36') doté d'un dispositif de blocage.

23. Frein de roue selon la revendication 21,
**caractérisé en ce que** l'actionneur comporte un entraînement par broche conçu autobloquant et coopérant avec un moteur électrique (36, 36').

24. Frein de roue selon l'une des revendications 21 à 23,
**caractérisé en ce que** les moyens élastiques faisant ressort agissent sur un agencement cunéiforme comportant la surface d'élément cunéiforme (20, 20') et monté sur le dispositif d'auto-amplification, et que les dits moyens prennent directement ou indirectement appui sur l'actionneur bloqué.

25. Frein de roue selon l'une des revendications 21 à 24,
**caractérisé en ce que** les moyens élastiques faisant ressort sont constitués par un ressort cylindrique exerçant une pression en position de freinage de stationnement.

26. Frein de roue selon l'une des revendications 21 à 25,
**caractérisé en ce que** les entraînements (34, 34') sont formés par des actionneurs linéaires qui sont chacun en liaison active avec l'élément cunéiforme (18) par le biais d'une bielle (38, 38') comportant une tête de bielle (39, 39'), et **en ce que** les moyens élastiques faisant ressort, qui, en position de freinage de stationnement, exercent une force de serrage sur l'organe de friction, sont disposés entre les têtes de bielle (39, 39')

27. Frein de roue selon l'une des revendications 21 à 25,
**caractérisé en ce que** les entraînements (34, 34') sont formés par des actionneurs linéaires qui sont chacun en liaison active avec l'élément cunéiforme (18) par le biais d'une bielle (38, 38') comportant une tête de bielle (39, 39'), et **en ce que** les moyens élastiques faisant ressort, qui, en position de freinage de stationnement, exercent une force de serrage sur l'organe de friction, sont disposés entre la tête de bielle (39) de l'actionneur linéaire par lequel le frein de roue (10) est mis en position de freinage de stationnement et un agencement cunéiforme (18) comportant l'élément cunéiforme (18).

28. Frein de roue selon l'une des revendications 21 à 27,
**caractérisé en ce qu'**il est prévu un entraînement distinct supplémentaire pour le desserrage du frein de roue (10) depuis la position de freinage de stationnement.

29. Frein de roue selon la revendication 28,
**caractérisé en ce que** l'entraînement distinct comporte un engrenage à vis sans fin.

30. Frein de roue selon la revendication 29,
**caractérisé en ce que** l'engrenage à vis sans fin (46, 48) et l'entraînement (44) font partie intégrante d'un dispositif de réglage (42) pour compenser l'usure des garnitures de friction.
